# EUROPEAN PATENT APPLICATION

(11) **EP 4 707 899 A2**
(43) Date of publication of application: **11.03.2026**
(21) Application number: 25227748.8
(22) Date of filing: 12.05.2020
(51) Int. Cl.: G02B 26/00

(54) **TUNABLE PRISM**

(30) Priority: 12.05.2019 EP 19173970; 20.12.2019 EP 19219062
(62) Divisional of application: 20174091.7
(71) Applicant: Optotune Switzerland AG, 8953 Dietikon (CH)
(72) Inventor: SMOLKA, Stephan, 8953 Dietikon (CH); ASCHWANDEN, Manuel, 8953 Dietikon (CH); HAASE, Johannes, 8953 Dietikon (CH); BIERN, Sanggyu, 8953 Dietikon (CH); BOSE, Frank, 8953 Dietikon (CH)
(74) Representative: Schulz Junghans Patentanwälte PartGmbB

(57) **Abstract**

The present invention relates to a tunable prism (1) for deflecting light (L) incident on the tunable prism (1) in a variable fashion, wherein the tunable prism (1) comprises: a member (10) comprising a transparent and flexible first surface (11), a transparent and flexible second surface (12) that faces away from the first surface (11), and an optical medium (2) arranged between the two surfaces (11, 12), such that light (L) incident on the first surface (11) passes through the optical medium (2) and exits the member (10) via the second surface (12), whereby the light (L) is deflected by the member (10) depending on an angle (W) between the two surfaces (11, 12); a rigid first optical element (20) comprising a surface area (21) connected to the first surface (11); a rigid second optical element (30) comprising a surface area (31) connected to the second surface (12); and an actuator system (S) configured to tilt the first optical element (20) and/or the second optical element (30) to tune said angle (W).

## Description

The present invention relates to a tunable prism.

Particularly, such a tunable prism can be used to deflect a light beam incident on the prism in a controlled tunable fashion, i.e. an optical deflection angle of the light beam can be adjusted.

The tunable prism according to the present invention can therefore be used for beam steering application, optical image stabilization, and super resolution (e.g. by means of pixel shifting).

Since it is often required to integrate tunable prisms in devices with rather restricted and small installation spaces in a certain direction (such as smart phones and other consumer electronics), it is desirable to minimize the design at least in one critical dimension of the prism while having at the same time a clear aperture along this direction that is as large as possible.

It is an objective of the present invention to provide an improved tunable prism, particularly regarding the above-stated challenge of reducing the installation space and maximizing the clear aperture in a certain direction.

This objective is solved by a tunable prism having the features of claim 1.

Advantageous embodiments of this aspect of the present invention are stated in the corresponding sub claims and are described below.

According to claim 1, a tunable prism for deflecting a light beam incident on the tunable prism is disclosed, wherein the tunable prism comprises:
- a member comprising a transparent and flexible first surface, a transparent and flexible second surface that faces away from the first surface, and an optical medium arranged between the two surfaces, such that light incident on the first surface passes through the optical medium and exits the member via the second surface, whereby the light is deflected by the member depending on an angle between the two surfaces,
- a rigid and transparent first optical element comprising a surface area connected to the first surface,
- a rigid and transparent second optical element comprising a surface area connected to the second surface, and
- an actuator system configured to tilt the first optical element and/or the second optical element to tune said angle.

Particularly, said angle can be a dihedral angle, i.e. the angle between the extension plane of the first surface and the extension plane of the second surface in a third plane which cuts the intersection between the two extension planes at right angles.

In all embodiments, the surface area of the first optical element that is attached to the member can be a surface area. Particularly, it can comprise a circular, an elliptical or a rectangular shape (other shapes are also conceivable). In the same way, the surface area of the second optical element that is attached to the member can be a surface area. Particularly, it can also comprise a circular, an elliptical, or a rectangular shape (other shapes are also conceivable).

Particularly, the surfaces areas of the optical elements do not need to be flat. They can also be curved (e.g. have a concave or a convex shape or form any other wave shaping element). The optical elements can also have one surface (e.g. the surface area) that is flat while the opposing surface comprises a different shape or vice versa.

The tunable prism allows in principle to have a small height in one direction which can be of the order of the clear aperture of the system, while components such as individual actuators of the actuator system can be arranged along a direction that is perpendicular to said height direction. This allows to integrate the tunable prism in devices such as smart phones which have restricted installation spaces in one direction (e.g. perpendicular to the display surface).

According to an embodiment of the present invention, the surface area of the first optical element is connected to a portion of the first surface such that the first surface comprises a free circumferential portion not covered by the surface area of the first optical element, and/or wherein the surface area of the second optical element is connected to a portion of the second surface such that the second surface comprises a free circumferential portion not covered by the surface area of the second optical element. Particularly, said circumferential portion of the first surface surrounds said portion of the first surface. Furthermore, particularly, said circumferential portion of the second surface surrounds said portion of the second surface.

Particularly, the surface area of the first optical element can be delimited by a circumferential edge of the first optical element. Further, the surface area of the second optical element can be delimited by a circumferential edge of the second optical element.

Furthermore, according to an embodiment of the present invention, the member is a container filled with the optical medium, wherein the container comprises a first transparent and elastically deformable membrane and a second transparent and elastically deformable membrane, wherein the two membranes are connected by a circumferential lateral wall of the container, and wherein the first membrane forms said first surface, and wherein the second membrane forms said second surface, wherein the optical medium is arranged between the first and the second membrane. Particularly, the free circumferential portion of the first surface is formed by a corresponding free circumferential portion of the first membrane. Similarly, the free circumferential portion of the second surface is particularly formed by a corresponding free circumferential portion of the second membrane.

Particularly, the first surface and/or the second surface can comprise an anti-reflection coating to minimize reflection of the prism.

According to a further embodiment, the lateral wall can be a rigid lateral wall. According to yet another embodiment, particularly for reducing a force necessary for tilting the first or second optical element, the lateral wall is a flexible lateral wall.

Furthermore, according to an embodiment of the present invention, a diameter of the surface area of the first optical element is smaller than a diameter of a volume surrounded by the circumferential lateral wall. Further, in an embodiment, a diameter of the surface area of the second optical element is smaller than the diameter of said volume surrounded by the circumferential lateral wall.

Furthermore, according to an alternative embodiment of the present invention, the member is a container comprising a transparent and elastically deformable membrane enclosing the optical medium (the membrane thus also forms a circumferential lateral wall of the member), wherein the membrane forms said first surface and said second surface.

Furthermore, according to an alternative embodiment of the present invention, the container comprises a first transparent and elastically deformable membrane and a second transparent and elastically deformable membrane, wherein the two membranes are connected to one another to enclose the optical medium, wherein the first membrane forms said first surface and wherein the second membrane forms said second surface. Particularly, also here, a circumferential lateral wall of the member is formed by the connected membranes themselves.

Furthermore, according to an embodiment of the present invention, the optical medium is a transparent liquid or a transparent gel.

Furthermore, according to an embodiment of the present invention, the member is one of: a transparent and flexible body, a transparent and flexible body formed out of a rubber, a transparent and flexible body formed out of a cured gel. Here, particularly, the body (i.e. member) is formed out of the optical medium (e.g. rubber, gel or another material) and comprises the first and the second surface.

Furthermore, according to an embodiment of the present invention, the tunable prism comprises a first holding structure (also denoted as first prism shaper) configured to hold the first optical element. Further, in an embodiment, the tunable prism comprises a second holding structure (also denoted as second prism shaper) configured to hold the second optical element.

Furthermore, according to an embodiment of the present invention, the first holding structure is formed by a plate comprising an opening, wherein the first optical element is arranged in front of the opening and particularly between the first holding structure and the first surface of the member. Further, in an embodiment, the second holding structure is formed by a plate comprising an opening, wherein the second optical element is arranged in front of the opening of the second holding structure and particularly between the second holding structure and the second surface of the member.

Particularly, the first optical element can be connected to a circumferential boundary region of the first holding structure, which boundary region surrounds the opening of the first holding structure. Likewise, the second optical element can be connected to a circumferential boundary region of the second holding structure, which boundary region (of the second holding structure) surrounds the opening of the second holding structure.

Particularly, the respective opening can be one of: a circular opening, an elliptical opening, a rectangular opening. The respective plate can be a rectangular plate.

Furthermore, according to an embodiment of the present invention, particularly for increasing the free circumferential portion of the first surface of the member/container, the first optical element is connected to the first holding structure via a first intermediate optical element, wherein the first intermediate optical element comprises a diameter that is larger than a diameter of the first optical element. Further, in an embodiment, particularly for increasing the free circumferential portion of the second surface of the member/container, the second optical element is connected to the second holding structure via a second intermediate optical element, wherein the second intermediate optical element comprises a diameter that is larger than a diameter of the second optical element.

Particularly, the diameter of the first intermediate optical element is larger than an inner diameter of the opening of the first holding structure. Further, particularly, the diameter of the first optical element is larger or equal to the inner diameter of the opening of the first holding structure.

Likewise, the diameter of the second intermediate optical element is larger than an inner diameter of the opening of the second holding structure. Further, particularly, the diameter of the second optical element is larger or equal to the inner diameter of the opening of the second holding structure.

Preferably, the first optical element and the first intermediate optical element connected thereto form a circumferential step. Likewise, preferably, the second optical element and the second intermediate optical element connected thereto form a circumferential step, too.

Particularly, the surface area of the first optical element and/or the surface area of the second optical element can correspond to the clear aperture of the tunable prism.

Furthermore, according to an embodiment of the present invention, the first holding structure is integrally formed with the first optical element as one piece. Further, in an embodiment, the second holding structure is integrally formed with the second optical element as one piece.

Increasing the free circumferential portions of the first surface (or first membrane) and/or of the second surface (e.g. second membrane), i.e., decreasing the necessary force for tilting the respective optical element, can also be achieved using a protrusion of the respective optical element, as described in the following.

According to an embodiment of the present invention, the first optical element comprises an (e.g. integral) protrusion (e.g. so that the first optical element comprises a circumferential step), wherein the surface area of the first optical element is delimited by a circumferential edge of the protrusion and forms a face side of the protrusion. Further, in an embodiment, the second optical element comprises an (e.g. integral) protrusion (e.g. so that the second optical element comprises a circumferential step, too), wherein the surface area of the second optical element is delimited by a circumferential edge of the protrusion of the second optical element and forms the face side of the protrusion of the second optical element.

Furthermore, according to an embodiment of the present invention, the tunable prism is rigidly connected to a support structure of the tunable prism through one of the two (i.e. first or second) holding structures, wherein the actuator system is configured to act on the other holding structure so as to adjust said angle. Here, particularly, the member is supported in a floating manner on the holding structure that is connected to the support structure of the tunable prism.

Furthermore, according to an embodiment of the present invention, the tunable prism is rigidly connected to a support structure of the tunable prism through the member or container (particularly through the circumferential lateral wall of the member/container), wherein the actuator system is configured to act on the first holding structure to tilt the first optical element and to act on the second holding structure to tilt the second optical element so as to adjust said angle.

Furthermore, according to an embodiment of the present invention, the member is connected to a support structure of the tunable prism via one or several springs or via a gimbal.

Furthermore, according to an embodiment of the present invention, the actuator system comprises a plurality of actuators to tilt the first holding structure about a first axis and/or about a second axis, wherein particularly the two axes are perpendicular. Furthermore, in an embodiment, the actuator system comprises a plurality of actuators to tilt the second holding structure about a first axis and/or about a second axis, wherein particularly the two axes are perpendicular.

The respective actuator can be any kind of a suitable actuator, particularly one of: a voice coil actuator, a shape memory alloy actuator, a piezo actuator, an electropermanent magnet actuator. Preferably, at least one actuator is used per tilt dimension.

Furthermore, according to an embodiment of the present invention, the tunable prism (particularly the first and/or the second holding structure) comprises a height in a first direction and a length in a second direction extending perpendicular to the first direction, wherein the two directions extend perpendicular to an optical axis of the tunable prism, and wherein the height is smaller than the length.

Furthermore, according to an embodiment of the present invention, the actuators of the actuator system are grouped in two actuator groups, wherein said actuator groups are arranged on opposite sides of the member with respect to the second direction (i.e. the member is arranged between the two actuator groups with respect to the second direction). One may also use only one of the groups (i.e. only the actuators on one side of the member), which would however result in having only half the force per tilt direction, due to the smaller number of actuators. Correspondingly, in an embodiment, all actuators of the actuator system are arranged on one side of the member.

Furthermore, according to an embodiment of the present invention, a Hall sensor is arranged adjacent each actuator to measure a stroke of the respective actuator, particularly the position of the prism tilt or angle, wherein particularly the tunable prism is configured to use the respective measured stroke to control tuning of said angle or to reduce crosstalk between individual actuators. Further, the strokes may also be used in a closed loop control algorithm to be able to use actuators, which are different from each other, and/or to achieve faster step responses, and/or to counteract the aging and loss of efficiency of the actuators, and/or to counteract external force influences such as magnetic fields.

Furthermore, according to an embodiment of the present invention, the tunable prism comprises a temperature sensor adjacent the optical medium to measure the temperature of the optical medium.

Particularly, the temperature sensor can be arranged on one of the holding structures, or on one of the optical elements (e.g. on the first or the second holding element), or on the lateral wall

Furthermore, according to an embodiment of the present invention, for generating a desired optical deflection angle of the light passing the adjustable prism, the tunable prism is configured to determine an actual refractive index of the optical medium based on the measured temperature and to determine a reference value of said angle so that the desired optical deflection angle is achieved when said angle of the tunable prism is tuned to the determined reference value.

Furthermore, according to yet another aspect of the present invention, a tunable prism for deflecting light incident on the tunable prism in a variable fashion is disclosed, wherein the tunable prism comprises:
- a rigid first optical element comprising a surface area,
- a rigid second optical element comprising a surface area,
- an optical medium arranged between the two surfaces areas, such that light incident on the first rigid optical element can pass the surface area of the rigid first optical element, the optical medium and the surface area of the rigid second optical element, whereby the light is deflected depending on an angle between the two surface areas.

In the following, preferred embodiments of this aspect of the present invention are described. These embodiments can also be used in conjunction with the tunable prism according to a first aspect of the invention described further above.

According to an embodiment, the first rigid optical element is a rigid prism. Here, particularly, the rigid second optical element is not a prism, but can be a plate member, for example a flat plate member or some other optical element (for example a rigid lens). The rigid prism can be formed out of a suitable transparent material such as a glass or a plastic material such as a polymer.

Joining a rigid prism directly with the tunable prism offers various advantages. So far, in folded camera systems, the folded rigid prism is tilted or an additional tunable prism is tilted and both components are separated from one another.

The moving mass is much smaller when a flat member of the tunable prism is tilted as compared to a rigid prism (for example glass prism). Furthermore, the Abbe Number of a combined system rigid prism and an independent system can be increased as one can have one glass window less (rigid prism directly glued to the flexible container enclosing the optical medium.

This also results in a higher light transmission and less wave front errors as one reduces the amount of reflecting surfaces.

Generally, this embodiment also allows reducing the number of parts so that one has less alignment challenges.

Generally, using a prism instead of a mirror as the folding element, one can reduce the incident area, i.e. a prism requires less space / height. Alternatively, for the same space for the folding element the #f-number can be smaller as it is given by the light area.

According to an embodiment, the rigid first optical element comprises an exterior surface that extends at an acute angle with respect to the surface area of the rigid first optical element, wherein the exterior surface is configured to receive light that is to be deflected by the tunable prism. Particularly, this exterior surface faces away from the surface area of the rigid first optical element.

Further, according to an embodiment, the rigid first optical element comprises a convexly curved first edge and a convexly curved second edge opposite the first edge, and wherein the rigid first optical element comprises a straight third edge and a straight fourth edge opposite the third edge, the third and fourth edges extending between the first and second edges, respectively. Such optical elements are also denoted as D-cut optical elements.

Furthermore, according to an embodiment, the rigid second optical element comprises a convexly curved first edge and a convexly curved second edge opposite the first edge, and wherein the rigid second optical element comprises a straight third edge and a straight fourth edge opposite the third edge, the third and fourth edges extending between the first and second edges, respectively.

Furthermore, according to yet another embodiment, the second rigid optical element is configured to be tilted with respect to the first rigid optical element to tune, i.e., adjust, said angle between the surface areas of the rigid optical elements, which allows deflecting light entering the tunable prism in an adjustable fashion.

Preferably, according to an embodiment, the tunable prism comprises at least one actuator to tilt the rigid second optical element with respect to the rigid first optical element.

According to a further embodiment, the respective actuator (for example the respective actuator of the actuator system described further above or the at least one actuator described above) comprises a magnet and an opposing electrical coil to generate a Lorentz force when an electrical current is applied to the electrical coil for tuning said angle of the tunable prism.

Particularly, the tunable prism can comprise plurality of actuators with such a magnet and electrical coil arrangement configured to tilt the rigid first optical element and/or the rigid second optical element about one or two different axes, respectively, to tune said angle of the tunable prism.

Particularly, in an embodiment, when the surface areas of the rigid first and rigid second optical element are parallel, a winding axis around which windings formed by a conductor of the electrical coil extend is preferably aligned or parallel with a magnetization of the magnet.

Further, according to an embodiment, the magnet is spaced apart from the electrical coil in the direction of the magnetization and/or of the winding axis of the electrical coil. In an alternative embodiment, the magnet protrudes into a central opening of the electrical coil, wherein the windings of the electrical coil extend around this central opening.

Furthermore, according to an embodiment, the magnet is connected to the rigid second optical element and the electrical coil is connected to the rigid first optical element (or vice versa).

Furthermore, in an embodiment, the rigid second optical element and the magnet connected thereto can be stationary, whereas the rigid first optical element and the opposing coil connected thereto are configured to be tilted using the actuator(s).

Furthermore, in an alternative embodiment, the rigid first optical element and the electrical coil connected thereto can be stationary, whereas the rigid second optical element and the magnet connected thereto are configured to be tilted (this is particularly suited in case the rigid first optical element is a rigid prism, wherein several actuators each comprising the afore-described magnet / electrical coil configuration can be used to tilt the rigid second optical element in two dimensions, i.e, about two different axes, to form the container into a prism (for example wedge shape) to deflect the light passing the tunable prism in 2D.

In all embodiments the position of the magnet and the opposing electrical coil of the respective actuator can in principle be interchanged.

Preferably, the respective electrical coil is integrated into a printed circuit board.

Particularly, according to an embodiment, for tilting the rigid second optical element, the at least one actuator is connected to an exterior side of the rigid second optical element, which exterior side faces the rigid first optical element, so that particularly the at least one actuator is arranged laterally of the rigid first optical element.

Alternatively, for tilting the rigid second optical element, the at least one actuator can be connected to an exterior side of the rigid second optical element, which exterior side faces away from the rigid first optical element, so that particularly the second optical element is arranged between the at least one actuator and the rigid first optical element.

According to a further embodiment, the at least one actuator is connected via a holding structure to the exterior side, wherein the holding structure is configured to hold the rigid second optical element. The holding structure is attached to the exterior side and thus forms an intermediary element between the actuator and the rigid second optical element.

According to an embodiment, the holding structure can be formed by a plate comprising an opening, wherein the rigid second optical element is arranged in front of the opening. The opening can comprise two opposing straight edges and two opposing concave edges, wherein the respective concave edge extends between the two straight edges. Such an opening is preferably combined with a D-cut rigid second optical element (see also above). The opening can also have other contours (for example circular, rectangular or other shapes). Furthermore, the holding structures described herein can be formed out of one of the following materials: a metal, a glass, a plastic material, a polymer. Further, the respective holding structure can be one of: CNC machined, molded, stamped, etched.

The tunable prism can comprise a further holding structure for holding the first rigid optical element. Also the further holding structure can be formed by a plate comprising an opening, wherein the rigid first optical element is arranged in front of the opening of the further holding structure. Particularly, the rigid optical elements (and particularly the container) are preferably arranged between the two holding structures. Also the opening of the further holding structure can comprise two opposing straight edges and two opposing concave edges, wherein the respective concave edge extends between the two straight edges.

The further holding structure can be configured to fasten the tunable prism to a device (for example a device that uses the tunable prism as a component). Alternatively, the rigid first optical element itself can be configured to fasten the tunable prism to the device. In this regard, the holding structure or the rigid first optical element can be bonded (for example glued or welded) to a mounting structure of the device, or can be fastened thereto by other means such as screws, latching connections or a combination of the afore-mentioned fastening means. With the rigid first optical element (for example rigid prism) coupled to the device, the rigid second optical element can be tilted with respect to the rigid first optical device by means of the at least one actuator.

Furthermore, according to an embodiment, the optical medium is arranged in a flexible container, for example a container in the form of a bellows, wherein the container is connected to the first and second rigid optical element and arranged between the rigid first and the rigid second optical element, so that by tilting the rigid first optical element with respect to the rigid second optical element and/or by tilting the rigid second optical element with respect to the rigid first optical element, the container can be formed into a prism (for example into a wedge) so that light passing the container is deflected. Preferably, the optical medium completely fills an internal space enclosed by the container.

According to an embodiment, the container comprises a first transparent and elastically deformable membrane connected to the surface area of the rigid first optical element, wherein this first membrane forms a wall of the container.

Particularly, in an embodiment, the rigid second optical element forms a wall of the container, too, wherein the optical medium contacts the surface area of the rigid second optical element. Preferably, the first membrane is also connected to the second rigid optical element via an edge region of the first membrane.

According to a further embodiment, the container comprises a second transparent and elastically deformable membrane connected to the surface area of the rigid second optical element. Preferably the second membrane and the first membrane that is connected to the surface area of the rigid first optical element, are connected to one another, for example along a periphery of the respective membrane. **In** this embodiment, the optical medium is therefore enclosed by the two membranes.

Instead of connecting the peripheries of the two membranes, it is also possible according to an embodiment to connect the two membranes via a circumferential lateral wall of the container (for example a lateral wall in the form of a ring member), wherein also here the optical medium is arranged between the first and the second membrane.

According to one embodiment, the member delimits a volume of the optical medium completely on all sides. The member may comprise, in particular consist of, one or two membranes. The membrane(s) may have a pillow-like or bellows-like structure.

According to an embodiment at least one optical surface is made of the membrane(s), The first and/or second optical element is arranged directly on the membrane(s) on opposing sides of the volume enclosed by the member, the optical element may be a glass pane. The membrane may cover at least 95%, ins particular at least 99% of a surface of the optical element. In particular, a central area of the surface is completely bonded to a central area of the surface and in an outer area, of the surface, which surrounds the central area, the surface is free of the membrane. For example, the outer area has a width of 2 micrometer to 200 micrometer. In the central area the membrane may extend continuously along the said surface of the first and/or second the optical element. This results in the prism being particularly reliable.

According to one embodiment the first and the second membrane are connected to each other by means of plasma bonding. Furthermore, the optical element(s) and the membrane(s) may be connected to each other by means of plasma bonding. In particular, the holding structure(s) is/are connected to the optical element(s) by means of plasma bonding. For example, the plasma bonding process is an atmospheric plasma process or a low-pressure plasma process. In particular the optical element comprises clear borosilicate glass, which may be D263T-glass. The membrane comprises, or consists of, silicone. According to an embodiment, the entire prism has an Abbe number greater than 50, preferably greater than 70, particularly preferably greater than 80. For example, the optical element(s) has/have an Abbe Number between 40 and 70, the optical medium has an Abbe Number between 40 and 120 and the membrane has an Abbe Number between 30 and 60. Advantageously, the prism has particularly low chromatic aberrations.

According to an embodiment, the refractive index is matched between the optical medium, the membrane(s) and the optical element. For example, the refractive index of the membrane(s) is between the refractive index of the optical medium and the refractive index of the optical element(s). Advantageously, this results in a smooth transition of the refractive index within the prism, whereby internal reflections at the surfaces of the membrane(s) optical element(s) and the optical medium are minimized. **In** particular, the optical elements comprise an anti-reflection coating on a side facing away from the membrane(s). For example, the refractive index of the optical element(s) is 1.5±0.1 the refractive index of the membrane(s) is 1.4±0.1 and the refractive index of the optical medium is between 1.2 and 1.6. In particular, the refractive index of the optical medium is 1.3±0.1. Advantageously, a lower refractive index of the optical medium, which is for example less than 1.45, results in a larger mechanical tilt angle required for a certain optical tilt angle (deflection of a beam transmitted through the prism). Thus, a sensor with a relatively low mechanical resolution may be used to measure the mechanical tilt angle, while the resolution on the optical tilt remains high.

According to an embodiment, the total thickness of the optical elements and the membranes perpendicularly to the main extension direction of the prism is larger than the thickness of the optical medium along said direction.

According to an embodiment, the optical elements are mechanically connected to each other by means of the member. For example, the member provides sufficient range of motion, such that the distance of the optical elements along the beam path is adjustable. **In** particular the distance of the optical elements may be adjusted from 5 micrometer to at least 150 microns in particular to at least 370 microns. For example, the member comprises sufficient slack or sufficient elasticity of the membrane(s) so that the distance between the glasses can be set to at least 150 microns, in particular at least 370 microns. In particular, in a non-deflected state, a periphery of the member laterally extends over the surfaces of the optical element(s). In particular, the periphery corresponds to the free circumferential portion of the first membrane and/or the second membrane. In an extended state, the optical elements are pulled apart, whereby the periphery of the member is pulled between the optical elements. For example, the member has an elasticity of 0.3 MPa up to 10 MPa young modulus. **In** particular, the optical elements and the member have a total thickness of 400 microns up to 1500 microns in the extended state. Advantageously, the periphery enables a larger maximum distance between the optical elements and reduces the forces required to adjust the mechanical tilt.

According to an embodiment, the optical member(s) has/have a non-circular, in particular non-round, geometry in a top view. For example, the optical member(s) has/have a D-shaped contour in a top view. Alternatively, the optical member(s) has/have a rectangular contour with rounded corners or an ellipsoidal contour. Furthermore, the optical member(s) has/have a contour with two straight edges and two convexly curved edges, wherein the straight edges are opposed to each other and the convexly curved edges are opposed to each other. In particular, the contour of the optical member(s) has/have a minimum radius of curvature of 0.2 millimeters, in particular at least 0.5 mm. Advantageously, said contour of the optical member(s) reduce the risk of perforation of the membranes by the optical member(s).

According to an embodiment, the optical element(s) differ in their lateral extension seen in a top view. For example, the contours of the first optical element and the second optical element can be merged into one another by means of similarity images, while the contour of the first and the second optical element have different sizes. Advantageously, the differently sized first and second optical element allow increase the freedom of movement of the optical elements with respect to each other. Alternatively, the contour of the first rigid optical element differs from the contour of the second optical element, such that the contours may not be merged into one another by means of similarity images.

In particular, in a top view the liquid volume laterally extends beyond one of the optical elements in all directions. Advantageously the different size of the optical elements seen in a plan view allows fast tilting of the optical elements with respect to each other. Moreover, the liquid volume, which laterally extends over the edges of the optical elements serves as reservoir volume, which is pulled between the optical elements, when the distance between the optical elements increased, for example by pulling the optical elements apart.

According to one embodiment, the two membranes are prestrained. For example, the two membranes are prestrained by at least 2%, preferably by at least 10%, 25% or 50%. For example, the membranes are prestrained by thermal prestraining or mechanical prestraining. The prestraining of the membranes reduces the lateral extention of the member over the edges of the optical elements. Advantageously this results in a reduced size of the prism in lateral directions. Moreover, the prestraining results in a linear force response versus tilt., whereby interfacing the prism by means of an actuator is advantageously simplified.

According to one embodiment, the optical elements are movable relative to one another along their main plane of extent. Advantageously, the relative movement of the optical elements with respect to each other simplifies the installation of the prism in an optical assembly. Moreover, manufacturing tolerances may be compensated by relative movement of the optical elements with respect to each other.

According to one embodiment, the tunable prism comprises at least one endstop. The endstop is a mechanical hard stop, which limits the relative movement of the optical elements with respect to each other in at least one direction. In particular, the endstop is arranged to limit the relative movement of the first and second optical element in six directions. In particular, the endstop is in direct contact with one of the optical elements, when the movement of said optical element is limited by means of the endstop. For example, the endstop is arranged to limit the maximum and/or minimum distance between the optical elements. Furthermore, the endstop may limit the tilt of the optical elements with respect to each other.

The endstop may be arranged to limit the maximum distance between the optical elements in a direction perpendicular to the main extension plane of the optical elements. The endstop advantageously prevents the membranes from being subjected to excessive loads due to acceleration forces which displace the optical elements relative to one another.

According to one embodiment, the prism comprises a pivot structure, which is arranged to define the pivot point of one of the optical elements with respect to the other optical element. The pivot structure may be a gimbal. Alternatively, the pivot structure may comprise springs, which are attached to the actuator, wherein the springs provide a passive damping of the relative movement of the optical elements with respect to each other. Alternatively, the pivot structure may comprise a protrusion, which is fixedly connected to one of the optical elements. The protrusion engages in a rail element, which guides the movement of the protrusion along the rail element. For example, the protrusion has the shape of a ball, wherein the protrusion and the rail element build a ball joint. In particular, the pivot structure is the endstop. Advantageously, the pivot structure improves the tilt performance and makes the prism more robust against vibrations.

According to one embodiment of the tunable prism, the optical tilt angle is well defined for electro-magnetic radiation in the visible wavelength range from 350 nm to 800 nm. In particular, the optical tilt angle is well defined for electromagnetic radiation in the wavelength range of infrared and near infrared light.

Furthermore, there is also a device comprising the tunable prism. In particular, the device described here may comprise the tunable prism. That means all the features disclosed for the device are also disclosed for the tunable prism and vice versa.

According to one embodiment the device is a beam shifter for super resolution in projectors or cameras. In particular, the beam shifter is arranged in the beam path of the projector. The beam shifter is arranged to shift the direction in which light is emitted by the projector. The beam shifter shifts the image generated by the projector by a faction of the projector's pixel pitch, wherefore a particularly precise shifting is required. In the camera the beam shifter is arranged in the beam path front of an image sensor. The beam shifter is arranged to shift the image captured by means of the image sensor by a faction of the sensor's pixel pitch, wherefore a particularly precise shifting is required.

The beam shifter comprises a tunable prism, which enables to define the direction in which the light is emitted by the projector or in which the light impinges on the image sensor. The angle of the optical deflection is smaller than the angle of the mechanical deflection. Hence, the tunable prism enables particularly precise beam shifting. For example, the beam shifter is arranged to tilt the first optical element to at least two predefined positions, preferable at least four predefined positions. Thus, the resolution of the projector or the is increased by a factor of two, preferable by a factor of 4.

Moreover, the beam shifter is arranged to switch between the predefined positions particularly fast. For example, the beam shifter is arranged to switch into each of the predefined positions during one frame of the projected image. Thus, the frequency of switching between predefined positions of the beam shifter is at least n-times higher than the frame rate, wherein n corresponds to the number of predefined positions. In the camera, the beam shifter may be arranged to switch into each of the predefined positions, while a super resolution image is captured. Thus, the camera captures an image at each predefined position of the beam shifter, wherein the captured images are combined afterwards. The combined images result in a super resolution image.

Furthermore, the tunable prism is an intrinsically damped liquid system without additional mechanical resonances below 300Hz, in particular below 100 Hz. Advantageously, the tunable prism may be switched with a large bandwidth of frequencies.

To achieve particularly fast switching of the beam shifter, the tunable prism has a small moving mass. Thus, the maximum total weight of the first holding structure and the first optical element is 100 milligrams, preferably 60 milligrams. Furthermore, the tunable prim shifts the image in an angle with respect to the optical axis. In particular, the tunable prism does not rotate the image around the optical axis.

According to one embodiment, the device is an image stabilizer. The image stabilizer may be part of a camera unit, binoculars or a telescope. The image stabilizer reduces blurring in captured images, wherein the blurring is associated with the motion of the camera unit during exposure. The image stabilizer is arranged to compensate for pan and tilt (angular movement, equivalent to yaw and pitch) of the imaging device, binoculars or telescope. The image stabilizer comprises a tunable prism, which is arranged to compensate for parasitic motion during exposure. A mechanical tilt angle of the first optical element with respect to the second optical element results in an optical tilt angle. The optical tilt angle is measured between a beam impinging the tunable prism and the beam exiting the tunable prism. In particular, a change in the mechanical tilt angle is smaller than the respective change of the optical tilt angle. Thus, the tunable prism enables particularly precise control of the optical tilt angle. For example, 3.5 degrees in the mechanical tilt angle result in one degree of optical tilt angle.

In the following, embodiments of the aspects of the present invention as well as further features and advantages of the present invention are described with reference to the Figures, wherein
- Fig. 1: shows a schematical cross sectional view of an embodiment of a tunable prism according to the present invention;
- Fig. 2: shows a schematical top view of the tunable prism shown in Fig. 1;
- Fig. 2A: shows a modification of the actuator arrangement of Fig. 2;
- Fig. 3: shows a schematical top view of a variant of the tunable prism shown in Fig. 1, wherein here a first and/or a second optical element is tiltable about a single axis, respectively;
- Fig. 4A to 4C: show schematical top views of different embodiments of a tunable prism according to the present invention;
- Fig. 5: shows a schematical cross sectional view of an embodiment of a tunable prism according to the present invention, wherein the second holding structure is fixed to a support structure of the prism and the first holding structure is tiltable to tune the angle of the prism;
- Fig. 6: shows a schematical cross sectional view of an embodiment of a tunable prism according to the present invention, wherein a member of the prism comprising the optical medium is fixed to a support structure of the prism and a first holding structure and/or a second holding structure of the prism is tiltable to tune the angle of the prism;
- Fig. 7: shows the situation according to Fig. 6, wherein the optical deflection angle is indicated; furthermore, Fig. 6 also demonstrates that less actuation force is necessary per holding structure to deform the member in case both holding structures are actuated/tilted;
- Fig. 8: shows the torque applied to the member versus the mechanical tilting angle of the prism for fixed container and a floating container/member of the tunable prism;
- Fig. 9: shows a schematical cross sectional view of a further embodiment of a tunable prism according to the present invention wherein here intermediate optical elements reduce the size of the first and second optical element resulting in a lower actuation force as the free membrane area increases when tilting the respective optical element;
- Fig. 10: shows a modification of the embodiment shown in Fig. 9;
- Fig. 11: shows the torque versus the mechanical tilting angle of the prism for different stiffness values of the lateral wall of the member/container
- Fig. 12: shows the torque versus the tilting angle of the prism for different shapes of the member/container and different stiffness values of the member/container;
- Fig. 13: shows a schematical cross sectional view of a further embodiment of a tunable prism according to the present invention, wherein here the member of the prism is formed by a flexible body formed out of the optical medium;
- Fig. 14: shows a schematical cross sectional view of a further embodiment of a tunable prism according to the present invention, wherein here the member/container of the prism comprises a flexible lateral wall and the optical elements of the prism extend past the lateral wall;
- Fig. 15: shows a schematical cross sectional view of a further embodiment of the tunable prism according to the present invention, wherein the member/container is connected via one or several springs to a supporting structure of the tunable prism;
- Fig. 16: shows a schematical cross sectional view of a further embodiment of the tunable prism according to the present invention, wherein the member/container is connected via a gimbal to a supporting structure of the tunable prism;
- Fig. 17: shows a schematical cross sectional view of a further embodiment of the tunable prism according to the present invention, wherein the rigid first optical element preferably forms a rigid prism;
- Fig. 18: shows a schematical cross sectional view of a further embodiment of the tunable prism according to the present invention, wherein the rigid first optical element preferably forms a rigid prism;
- Fig. 19: shows a schematical cross sectional view of a further embodiment of the tunable prism according to the present invention, wherein the rigid first optical element preferably forms a rigid prism, and wherein a container for containing the optical medium is formed using a membrane and the rigid second optical element;
- Fig. 20: shows a schematical cross sectional view of a further embodiment of the tunable prism according to the present invention, wherein the rigid first optical element preferably forms a rigid prism, and wherein a container for containing the optical medium is formed using two membranes and a circumferential lateral wall;
- Fig. 21: shows a schematical cross sectional view of a further embodiment of the tunable prism according to the present invention, wherein the rigid first optical element preferably forms a rigid prism, and wherein a container for containing the optical medium is formed using two membranes connected at the peripheries;
- Fig. 22: shows a perspective view of an embodiment of the tunable prism according to the present invention, wherein the rigid first optical element preferably forms a rigid prism, and wherein a holding structure is connected to the rigid second optical element (for example for tilting the latter);
- Fig. 23: shows a perspective view of an embodiment of the tunable prism according to the present invention, wherein the rigid first optical element preferably forms a rigid prism, and wherein the rigid second holding member is configured for being connected directly to at least one actuator for tilting the rigid second optical element;
- Fig. 24: shows a schematical top view of an embodiment of a tunable prism according to the present invention, wherein at least one actuator is arranged on a side of the rigid second optical element that faces the rigid first optical element (e.g. rigid prism);
- Fig. 25: shows a schematical lateral view of the embodiment shown in Fig. 24;
- Fig. 26: shows a schematical lateral view of an alternative embodiment of a tunable prism according to the present invention, wherein here the at least one actuator is arranged on a side of the rigid second optical element that faces away from the rigid first optical element (e.g. rigid prism);
- Fig. 27: shows a schematical lateral view of an embodiment of a tunable prism according to the present invention, wherein a holding structure (for example for making connection to at least one actuator) is arranged on a side of the rigid second optical element that faces away from the rigid first optical element (e.g. rigid prism);
- Fig. 28: shows a schematical lateral view of an alternative embodiment of a tunable prism according to the present invention, wherein here a holding structure (for example for making connection to at least one actuator) is arranged on a side of the rigid second optical element that faces the rigid first optical element (e.g. rigid prism);
- Fig. 29 A B C: show different embodiments of a tunable prism according to the invention comprising actuators having a magnet and an electrical coil opposite the magnet;
- Fig. 30: shows a perspective view of an embodiment of a tunable prism according to the invention, wherein the tunable prism comprises two D-cut rigid optical elements on either side of the optical medium, wherein particularly the rigid second optical element is configured to be connected to a further device;
- Fig. 31: shows a perspective view of an embodiment of a tunable prism according to the invention, wherein the tunable prism comprises two D-cut rigid optical elements on either side of the optical medium, wherein a first holding structure is connected to the rigid first optical element, and wherein particularly the rigid second optical element is configured to be connected to a further device; and
- Fig. 32: shows a perspective view of an embodiment of a tunable prism according to the invention, wherein the tunable prism comprises two D-cut rigid optical elements on either side of the optical medium, wherein a first holding structure is connected to the rigid first optical element, and wherein a second holding structure is connected to the rigid second optical element, wherein particularly the second holding structure is configured to be connected to a further device,
- Fig. 33, 34: shows a side view of an embodiment of a tunable prism comprising an endstop, which limits the relative motion of the optical elements along the z-axis,
- Fig. 35: shows a side view of an embodiment of a tunable prism comprising and endstop and a lateral endstop, which limits the relative motion of the optical elements along the z-axis, the x-axis and the y-axis,
- Fig. 36: shows a schematic perspective view of an embodiment of a tunable prism comprising a pivot structure,
- Fig. 37: partially shows a schematic side view of tunable prism, having a non-prestrained first and second membrane,

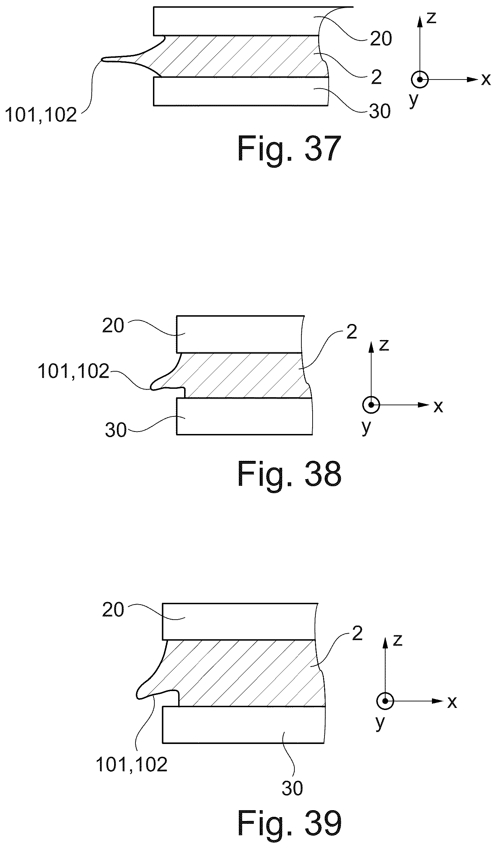

- Fig. 37 and 38: partially show a schematic side view of a tunable prism, having a prestrained first and second membrane,

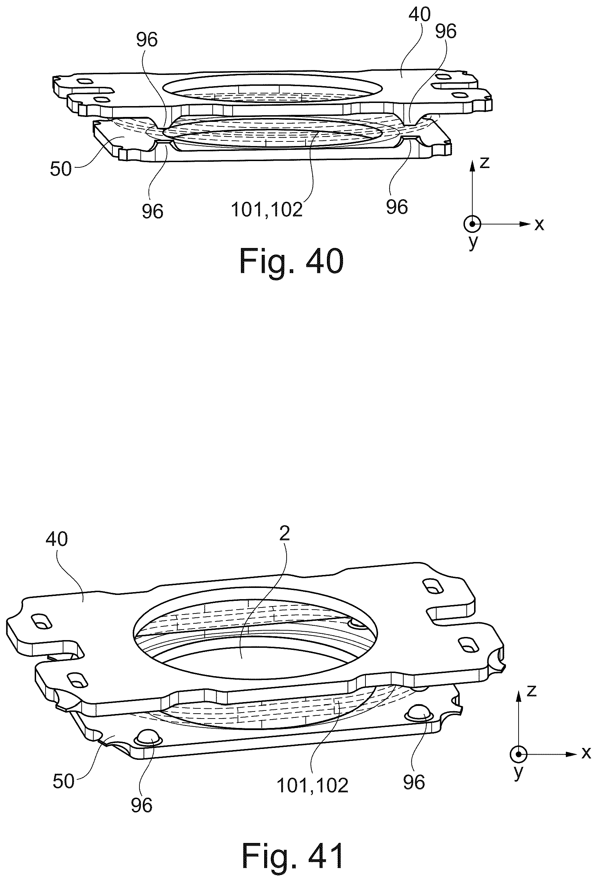

- Fig. 40 and 41: show embodiments of tunable prisms in schematic perspective views comprising interposed endstops which limit the relative motion of the optical elements along the z-axis,

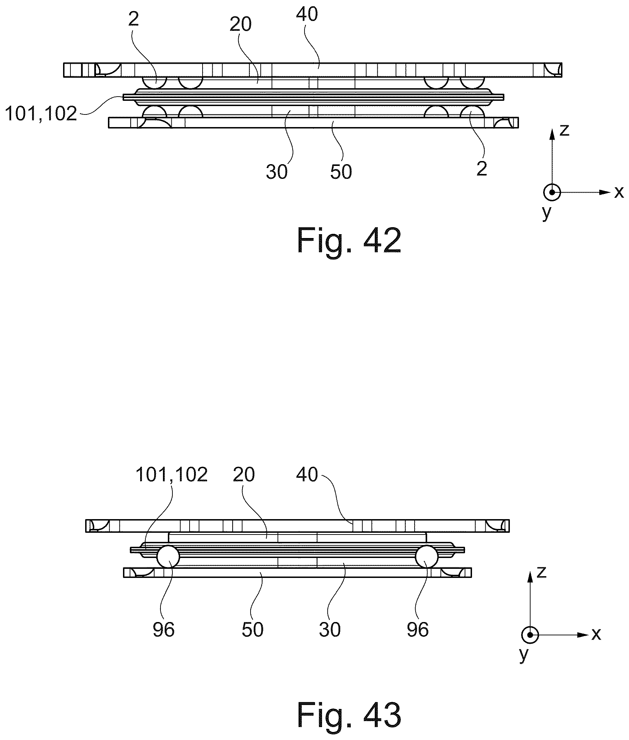

- Fig. 42 and 43: show embodiments of tunable prisms in schematic side views comprising interposed endstops which limit the relative motion of the optical elements along the z-axis.

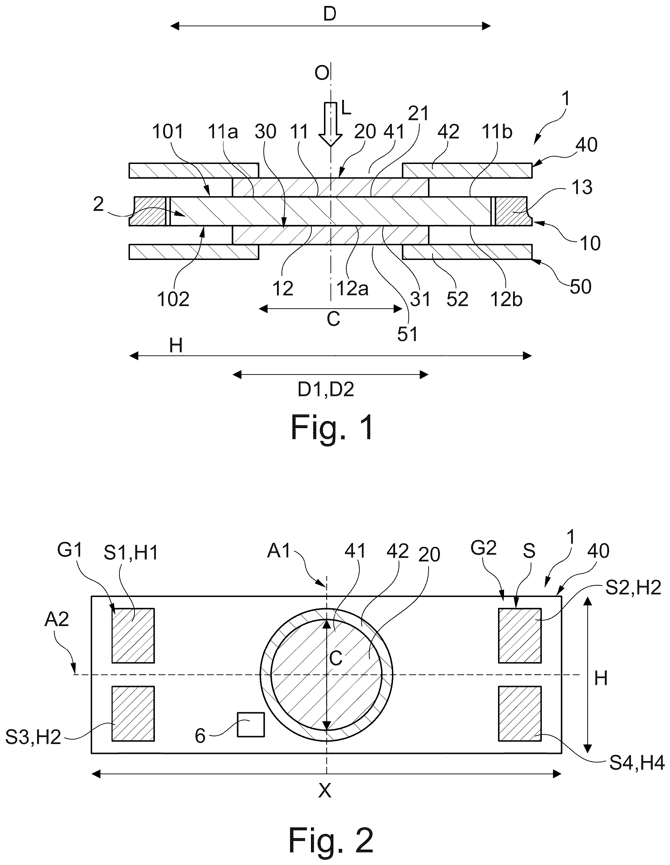

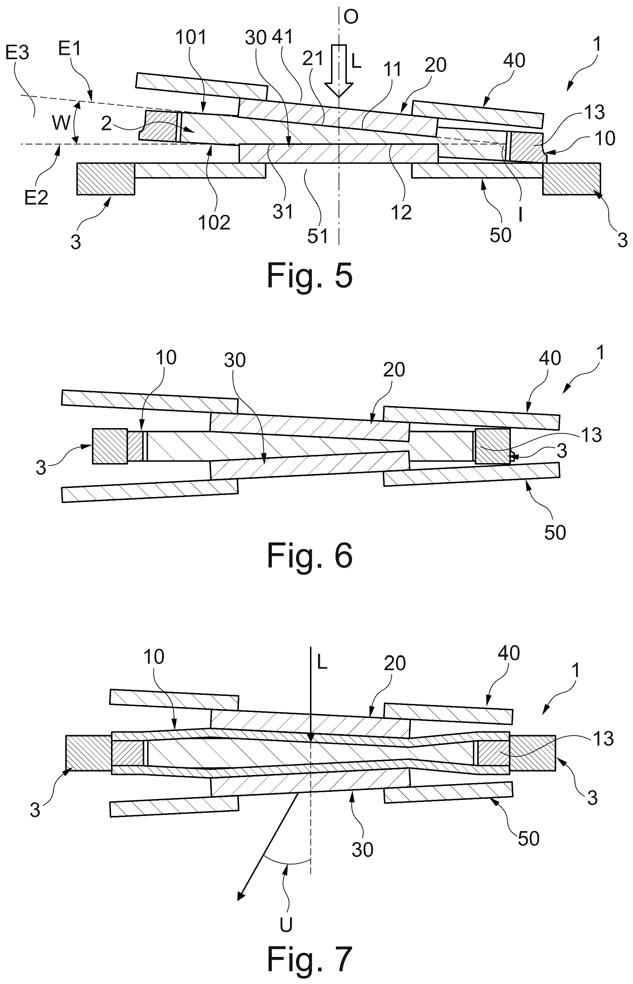

Fig. 1 shows an embodiment of a tunable prism 1 according to the present invention, which is configured to deflecting light L that impinges on the tunable prism 1 along the optical axis O in a tunable fashion, i.e. the prism 1 comprises an angle (herein also referred to as mechanical angle) W that can be tuned (cf. e.g. Fig. 5 indicating the angle W). To this end, the tunable prism 1 comprises a member 10 comprising a transparent and flexible first surface 11, a transparent and flexible second surface 12 that faces away from the first surface 11, and an optical medium 2 arranged between the two surfaces 11, 12, such that light L impinging on the first surface 11 passes through the optical medium 2 and exits the member 10 via the second surface 12 (or vice versa), whereby the light L is deflected by the member 10 depending on said angle W between the two surfaces 11, 12. This deflection corresponds to an optical deflection angle U that is for instance indicated in Fig. 7. Furthermore, the prism 1 comprises a rigid first optical element 20 comprising a surface area 21 attached (e.g. glued) to the first surface 11 of the member 10, and a rigid second optical element 30 comprising a surface area 31 attached (e.g. glued) to the second surface 12 of the member 10. Preferably, the two surface areas 21, 31 are flat, but may also be curved (see also above). This feature of the two surface areas 21, 31 may also apply to the other embodiments of the present invention. Further, the two optical elements 20, 30 face each other, wherein said member 10 is arranged between the two optical elements 20, 30. Particularly, the respective optical element 20, 30 can be a flat plate member 20, 30 having a further surface parallel to the respective surface area 21, 32. The optical elements 20, 30 can be formed out of a glass or a plastic material (e.g. a polymer).

Furthermore, the prism 1 preferably comprises an actuator system S that can consist of individual actuators S1, S2, S3, S4 configured to tilt the first optical element 20 and/or the second optical element 30 to tune said angle W described above.

Particularly, said angle W can be a dihedral angle, i.e. the angle between the extension plane E1 of the first surface 11 and the extension plane E2 of the second surface 12 in a third plane E3 which cuts the virtual intersection I between the two extension planes E1, E2 at right angles.

As further shown in Fig. 1, the surface area 21 of the first optical element 20 is attached to a portion 11a of the first surface 11 such that the first surface 11 comprises a free circumferential portion 11b not covered by the surface area 21 of the first optical element 20. Similarly, the surface area 31 of the second optical element is connected to a portion 12a of the second surface 12 such that the second surface 12 comprises a free circumferential portion 12b not covered by the surface area 31 of the second optical element 30.

Particularly, the surface area 21 of the first optical element 20 can be delimited by a circumferential edge of the first optical element 20. Likewise, the surface area 31 of the second optical element 30 can be delimited by a circumferential edge of the second optical element 30.

As further indicated in Fig. 1, the member 10 can be a container filled with the optical medium (e.g. a liquid or a gel) 2, wherein the container 10 comprises a first transparent and elastically deformable membrane 101 and a second transparent and elastically deformable membrane 102, wherein the two membranes 101, 102, that can be formed out of any suitable transparent and stretchable material such as a glass, a plastic material, a polymer (e.g. a silicone-based polymer) or an elastomer etc., are connected via a circumferential lateral wall 13 of the container 10. The circumferential lateral wall 13 can have various shapes, including also star-like configurations. Particularly, the first membrane 101 forms said first surface 11, and the second membrane 102 forms said second surface 12, wherein the optical medium 2 (e.g. a silicone oil) is arranged between the first and the second membrane 101, 102. Furthermore, the lateral wall 13 is rigid but can also be flexible in an alternative embodiment.

Furthermore, the diameters D1, D2 of the surface areas 21, 31 of the optical elements 20, 30 are smaller than a diameter D of a volume surrounded by the circumferential lateral wall 13 which ensures the free circumferential membrane portions / surface portions 11b, 12b.

Furthermore, for transferring an actuation force to the optical elements 20, 30, a first and a second holding structure 40, 50 are provided, wherein the first holding structure 40 is configured to hold the first optical element 20, and wherein the second holding structure 50 is configured to hold the second optical element 30. The holding structures 40, 50 are also denoted as prism shapers since they permit tilting the respective optical element 20, 30 which deforms the member 10 to yield the desired angle W. This angle W together with the refractive index of the optical medium 2 generates an optical deflection angle U of the deflected light beam L as shown in Fig. 7 as an example.

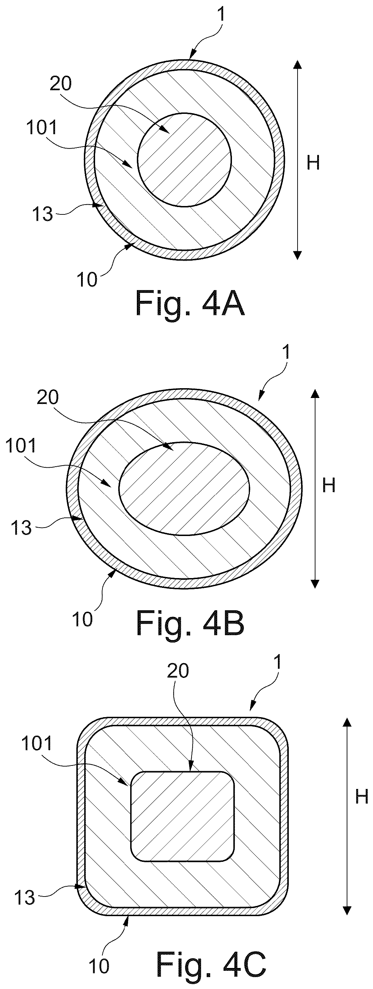

Particularly, the holding structures 40, 50 can each be formed by a plate 40, 50 comprising an opening 41, 51 in front of which the respective optical element 20, 30 is arranged. Particularly, the first optical element 20 can be connected to a circumferential boundary region 42 of the first holding structure 40, which boundary region 42 surrounds the opening 41 of the first holding structure 40. Likewise, the second optical element 30 can be connected to a circumferential boundary region 52 of the second holding structure 50, which boundary region 52 surrounds the opening 51 of the second holding structure 50. Particularly, the respective opening 41, 51 can be one of: a circular opening, an elliptical opening, a rectangular opening, or any other suitable shape. The respective plate 40, 50 can be a rectangular plate but may also comprises other contours (cf. also Figs. 4A to 4C).

Advantageously, the present invention allows maximizing the clear aperture C (i.e. the diameter of the openings 41, 51) of the prism 1 while keeping the prism height H to a minimum at the same time. This is supported by the fact, that the actuators S1, S2, S3, S4 of the actuator system S are preferably arranged along the second spatial direction (direction of prism length X). Thus, the actuators can be positioned laterally next to the member 10 and do not contribute to the prism height H. In this way the height H can be much smaller than the length X of the tunable prism 1.

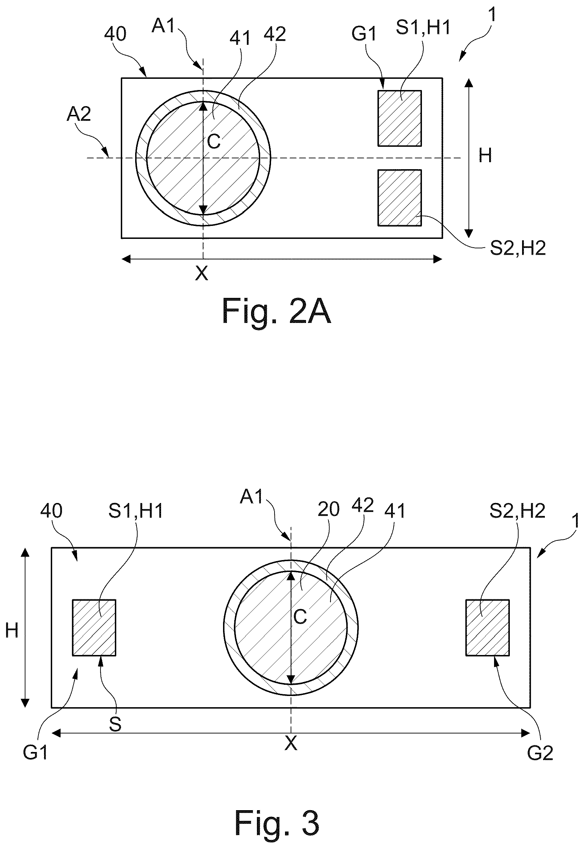

Particularly, as indicated in Fig. 2, the actuator system S can comprise four actuators S1, S2, S3, S4 to tilt the first holding structure 40 or the second holding structure 50 about a first axis A1 and a linearly independent second axis A2. The actuator system S can also be configured to tilt both holding structures 40, 50 about two axes A1, A2. Particularly, at least one actuator S1, S2, ... is used per tilt direction (on one side).

Furthermore, in case both holding structures / prism shapers 40, 50 are tilted, it is also possible to arrange components of the individual actuator on both structures 40, 50, e.g. an electrical coil can be placed on the first holding structure 40 while a corresponding magnet is placed on the second holding structure 50 (combined voice coil actuator). Such an actuator arrangement can also be used to arrange actuators S1, S2 only on one side of the member 10 as shown in Fig. 2A.

Particularly, each actuator S1, S2, S3, S4 acts on a corner region of the actuated holding structure (e.g. the first holding structure 40). Preferably, as shown in Fig. 2, the actuators S1, S2, S3, S4 are grouped in two actuator groups G1, G2, wherein said actuator groups G1, G2 are arranged on opposite sides of the member 10 with respect to the second direction that extends perpendicular the height H. In other words, the member 10 is arranged between the two actuator groups G1, G2 with respect to the second direction along which the prism 1 comprises the length X.

Particularly, the respective actuator S1, S2,... can be any kind of suitable actuator, particularly one of: a voice coil actuator, a shape memory alloy actuator, a piezo actuator, an electropermanent magnet actuator.

As indicated in Fig. 3, the tunable prism 1 can also be configured such that the first and/or the second holding structure 40, 50 can merely be tilted about a single axis A1, respectively. Here, at least two actuators S1, S2 are used, which are again preferably grouped as described above, i.e. the member 10 is arranged between the two actuators S1, S2 with respect to the second direction along which the prism 1 comprises its length X.

Furthermore, Fig. 4A to 4C generally show different possible contours of the optical elements 20, 30, the membranes 101, 102 and of the lateral wall 13, that can be used in the different embodiments. According to Fig. 4A the afore-mentioned components can comprise a circular contour. Alternatively, said components 20, 30; 101, 102; 13 may also comprise an elliptical contour (cf. Fig. 4B), or a rectangular contour (cf. Fig. 4C). Particularly, the respective free membrane portion 11b, 12b assumes its smallest value in the circular design (Fig. 4A) and the largest value in the rectangular design (Fig. 4C). The rectangular design may comprise rounded corners.

Further, for tuning the angle W of the prism 1, the second holding structure 50 can be rigidly connected to a support structure 3 of the tunable prism 1, wherein the actuator system S is configured to act on the first holding structure 40 to set the angle W. Thus, particularly, the member 10 is supported in a floating manner on the second holding structure 50 that is connected to the support structure 3 of the tunable prism 1.

Fig. 6 shows a further possibility, wherein here the member (e.g. container) 10 is rigidly connected to the support structure 3 instead. To this end, the lateral wall 13 can be fixed to said support structure 3. This allows one to tilt both holding structures 40, 50 (e.g. at the same time) to set the angle W of the prism 1 by means of the actuator system S.

Fig. 7 indicates the advantage of tilting both holding structures (prism shapers) 40, 50. Since both holding structures 40, 50 can be actuated (e.g. a larger number of actuators is used compared to Fig. 5) a higher tilting force is available to obtain the same optical tilting angle U. Having however the same number of actuators, the configuration of Fig. 6 comprises a similar efficiency as the configuration shown in Fig. 5.

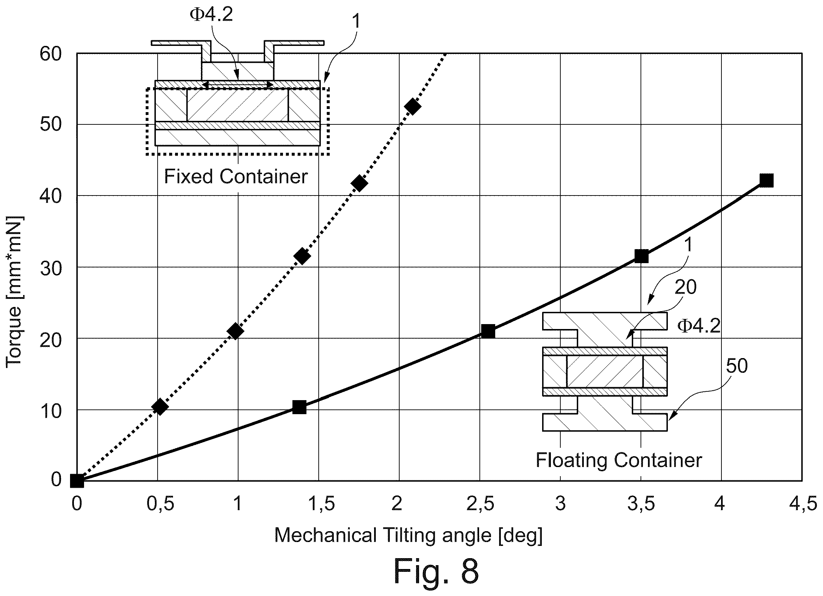

As can be seen from Fig. 8, which shows the torque as function of the mechanical tilting angle of the first or second holding structure 40, 50, the reduction of the prism height H and increase of the clear aperture C significantly increases the torque needed to actuate the prism 1 to a tilted state.

By introducing a floating container 10 and having a tiltable first optical element 20 having a diameter smaller than the inner diameter of the volume surrounded by the lateral wall 13, the torque can be reduced (here the second holding structure 50 is fixed).

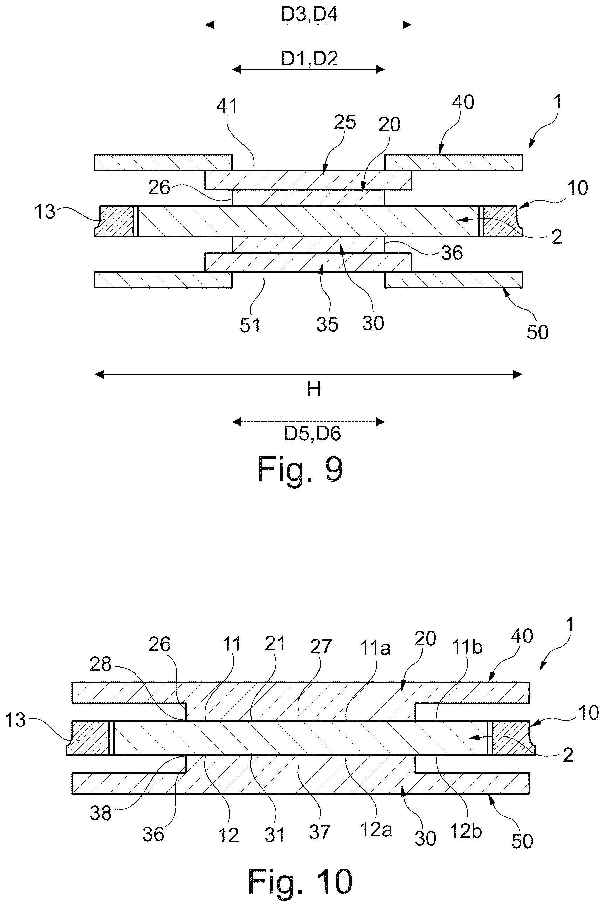

Figs. 9 and Fig. 10 show further strategies to lower the forces necessary for tilting the first and/or second holding structure 40, 50. These features aim at increasing the free membrane area 11b, 12b. The prism width increases accordingly.

Particularly, according to Fig. 9, the first optical element 20 can be connected to the first holding structure 40 via a first intermediate optical element 25, wherein the first intermediate optical element 25 comprises a diameter D3 that is larger than the diameter D1 of the first optical element 20. Analogously, the second optical element 30 is connected to the second holding structure 50 via a second intermediate optical element 35, wherein the second intermediate optical element 35 comprises a diameter D4 that is larger than the diameter D2 of the second optical element 30.

Therefore, the diameters D1, D2 of the optical elements 20, 30 can be reduced while the clear aperture C can be kept constant.

Due to the different diameters of the optical elements 20, 30 and the intermediate optical elements 25, 35, the first optical element 20 and the first intermediate optical element 25 connected thereto form a circumferential step 26. In the same manner, the second optical element 30 and the second intermediate optical element 35 connected thereto form a circumferential step 36, too.

These steps 26, 36 can also be generated when using holding structures 40, 50 that are integrally formed with the respective optical element 20, 30 as shown in Fig. 10. Here, the first optical element 20 comprises a protrusion 27 so that the first optical element 20 comprises a circumferential step 26, wherein the surface area 21 of the first optical element 20 is delimited by a circumferential edge 28 of the protrusion 27. In the same fashion, the second optical element 30 comprises a protrusion 37 so that the second optical element 30 comprises a circumferential step 36, wherein the surface area 31 of the second optical element 30 is delimited by a circumferential edge 38 of the protrusion 37 of the second optical element 30.

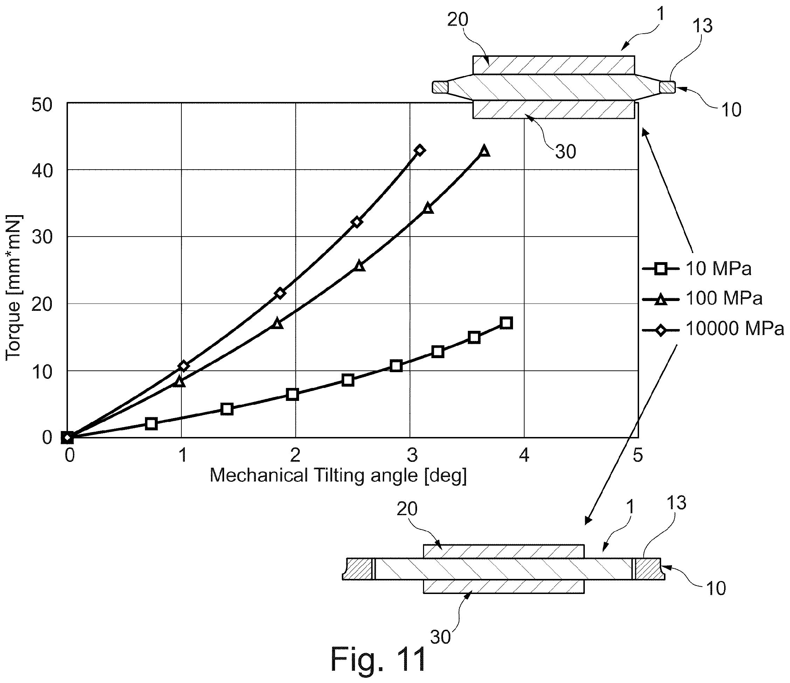

As further indicated in Fig. 11, also the stiffness, width and height of the wall member 13 influence the prism tilt force and can be used to reduce the force. Particularly, Fig. 11 shows that the torque can be reduced by using a flexible wall 13 (upper prism 1 in Fig. 11) instead of a rigid lateral wall 13 (lower prism 1 in Fig. 11).

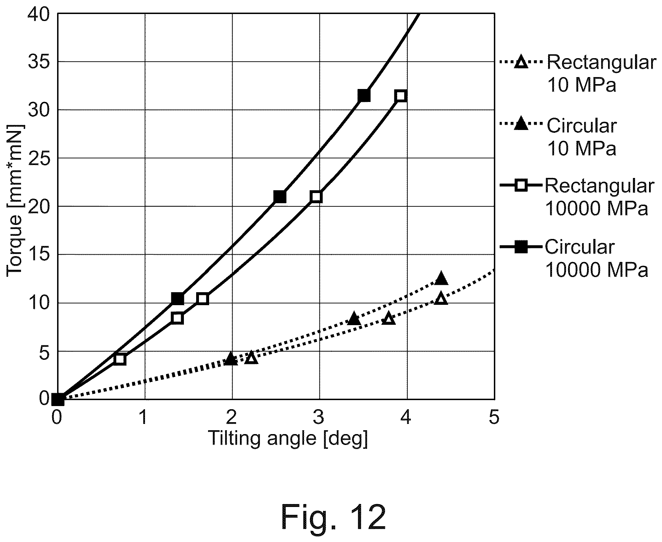

Furthermore, Fig. 12 states the torque as function of the tilting angle for different container contours (circular and rectangular, cf. also Figs. 4A and 4C) and stiffness of the respective container 10 to demonstrate the possibility of force reduction using different designs. Particularly, as the free membrane area 11b, 12b increases (e.g. from circular to rectangular), the required torque decreases. Further, as the stiffness of the container 10 decreases, the required torque decreases.

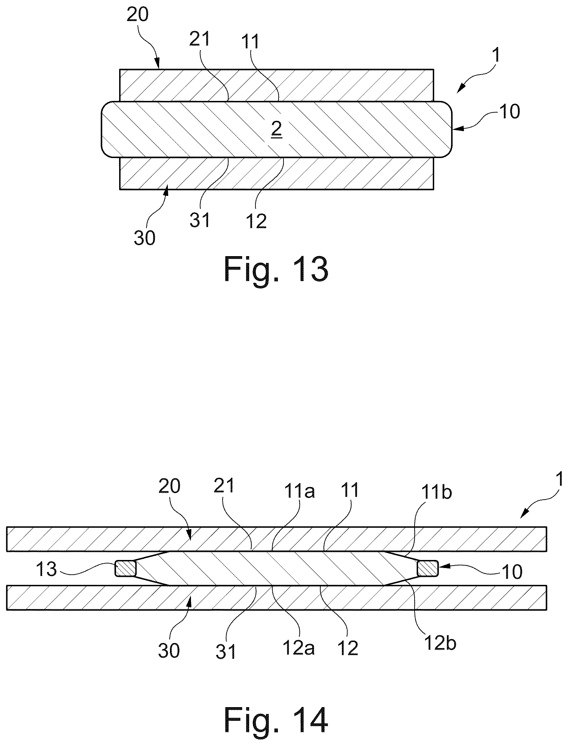

Furthermore, according to Fig. 13 the optical liquid/medium 2 and surrounding container 10 can be replaced with a transparent flexible body 10 formed out of the optical medium 2, particularly a curable silicone, gel or rubber drop, wherein the stiffness (shore) of the material 2 defines the tilt torque. A larger refractive index of the material 2 can reduce the required mechanical tilt angle W.

Furthermore, according to Fig. 14 the optical elements 30, 40 can be integrally formed with the respective holding structure 40, 50 in the form of flat plate members, wherein these plate members can be extended over the flexible member 10 to ensure a minimum member height to enable the mechanical tilt. This reduces the overall prism height in a cost effective manner.

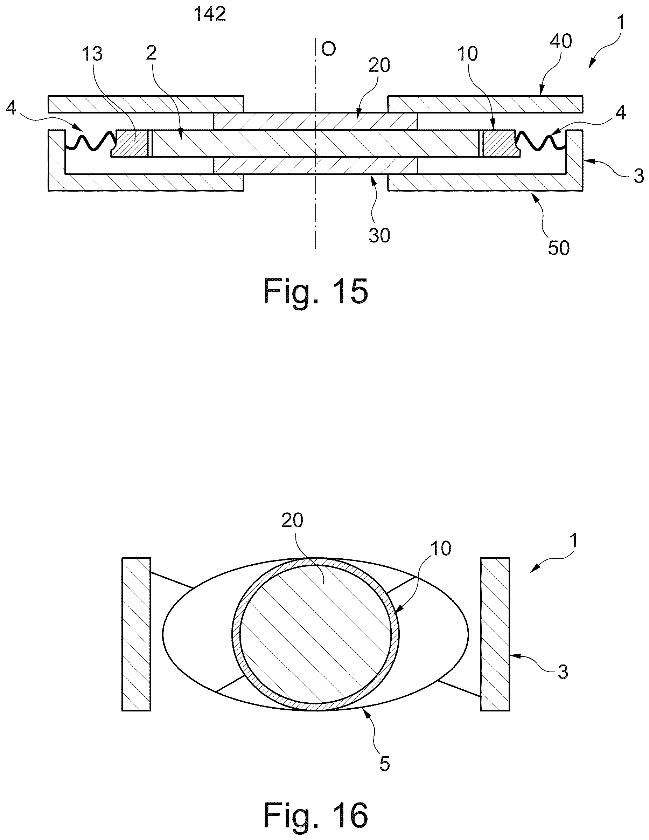

Furthermore, as shown in Figs. 15 and 16, the member/container 10 can be connected to the support structure 3 of the tunable prism 1 via one or several springs 4 or via a gimbal 5.

Such a spring connection of the lateral wall 13 of the member 10 to the support structure 3 reduces the member's movement in the direction of the optical axis O (z-position) and particular also in x- and y-direction, while still allowing a tilting movement. This reduction of the free moving mass enhances the rigidity of the prism 1, and thus improves the reliability with respect to drop or shock tests. Furthermore, the prism height is controlled enhancing the accuracy.

According to Fig. 16, also a two-dimensional gimbal 5 can be used to hold the member/container 10. **In** addition to the above-mentioned advantages, such a gimbal 5 helps to achieve a defined pivot point which enhances the measurement and tilting accuracy.

Particularly, by guiding the actuator system S with guiding springs, a defined pivot point for the prism 1 can be defined which reduces crosstalk between tilting the prism 1 and moving along z-direction (i.e. in the direction of the optical axis O). Also here, the actuation accuracy can be enhanced and the free moving mass of the actuator is reduced. This further enhances the rigidity of the prism 1 and therefore improves the reliability with respect to drop or shock tests. Further, the prism height is controlled enhancing the accuracy.

Furthermore, the actuator preferably comprises hard stops that limit the maximum tilt travel and z-moving travel (i.e. movement along the optical axis O) as well as travel perpendicular thereto (i.e. in x- and y-direction). Due to such stops, an overstretching, plastic deformation and rupture of the membranes 101, 102 can be avoided. As a result the stability during drop tests is improved.

Furthermore, reverting to Fig. 2, the tunable prism 1 preferably comprises multiple Hall sensors H1, H2, ..., wherein each Hall sensor is arranged adjacent one of the actuators S1, S2, ... to measure a stroke of the respective actuator, wherein particularly the tunable prism 1 is configured to use the respective measured stroke to control tuning of said angle W or to reduce crosstalk between individual actuators S1, S2,.... Generally, instead of Hall sensors, also other sensors may be used, e.g. capacitive or inductive sensors.

Due to such a crosstalk an unintended tilting can occur when trying to tilt an optical element 20, 30 in an intended direction. Fundamentally, the crosstalk may originate from asymmetric strokes of actuating parts. For instance, to tilt about the intended tilting axis shown in Fig. 2, e.g. the first axis A1, the group G2 comprising actuators S2, S4 needs to be actuated. If the corresponding strokes are asymmetric, an unintended tilting can manifest (e.g. about the second axis A2).

By mounting Hall sensors H1, H2,... near the actuator areas, one can read the respective stroke at each area and correct the asymmetry to reduce the crosstalk.

Furthermore, the tunable prism 1 can comprise a temperature sensor 6 (cf. Fig 2) adjacent the optical medium 2 to measure the temperature of the optical medium 2. Particularly, the temperature sensor 6 can be arranged on one of the holding structures 40, 50, or on one of the optical elements 20, 30 (e.g. on the first or the second holding element), or on the lateral wall 13.

Using the measured temperature, the refractive index of the optical liquid/medium 2 can be calculated and the mechanical angle W to achieve a desired optical deflection angle can be calculated.

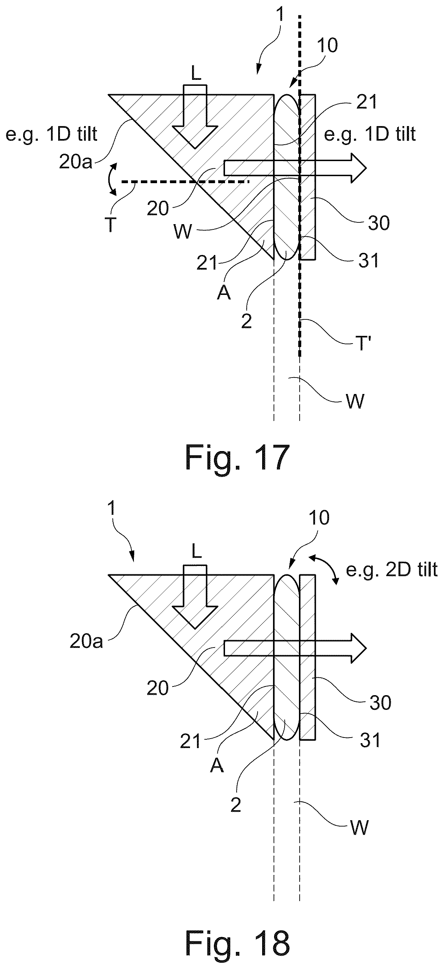

Figures 17 and 18 show further embodiments of a tunable prism 1 for deflecting light L incident on the tunable prism 1 (here on an exterior surface 20a of a rigid first optical element 20) in a variable fashion. The tunable prism 1 comprises a rigid first optical element 20 comprising a surface area 21, and a rigid second optical element 30 comprising a surface area 31, that faces the surface area 21 of the rigid first optical element 20. Furthermore, the tunable prism 1 comprises an optical medium (for example a liquid) 2 arranged between the two surfaces areas 21, 31, such that the light L incident on the first rigid optical element 20 passes the surface area 21 of the rigid first optical element 20, the optical medium 2 and the surface area 31 of the rigid second optical element 30, whereby the light L is deflected depending on an angle W between the two surface areas 21, 31. The angle W can be a dihedral angle as defined above. Preferably, the first rigid optical element 20 is a rigid prism formed for example out of a glass or a suitable polymer. Furthermore, the rigid second optical element 30 is a transparent flat plate, but may also comprise a curvature, to function as a rigid lens 30 (for example for correction of optical errors etc.). The rigid second optical element 30 can also be formed out of a glass or a plastic material (for example a suitable polymer).

Particularly, the exterior surface 20a of the rigid prism 20 extends at an acute angle A with respect to the surface area 21 of the rigid prism 20 and particularly meets the surface area 21 to form an edge of the rigid prism 20, wherein the exterior surface 20a is configured to receive the light L that is to be deflected by the tunable prism 1

As shown in Fig. 17, it is possible to tilt the rigid prism 20 about a first axis T as well as the second optical element 30 about a different second axis T' to influence the direction of the light beam L. The two axes T, T' can be perpendicular. The first axis T can be perpendicular to the surface area 21 of the rigid prism 20.

Alternatively, as indicated in Fig. 18, it is also possible to tilt the rigid second optical element 30, preferably about two independent axes and to maintain the rigid prism 20 fixed.

The optical medium 2, which can be a suitable liquid or gel, is preferably arranged in an at least partially transparent container 10, that is arranged between the two optical elements 20, 30 and connected to the surface areas 21, 32, wherein the container 10 is deformable so that it can be formed into a variable prism (for example a wedge shape) when the rigid first and/or the rigid second optical element 20, 30 are tilted.

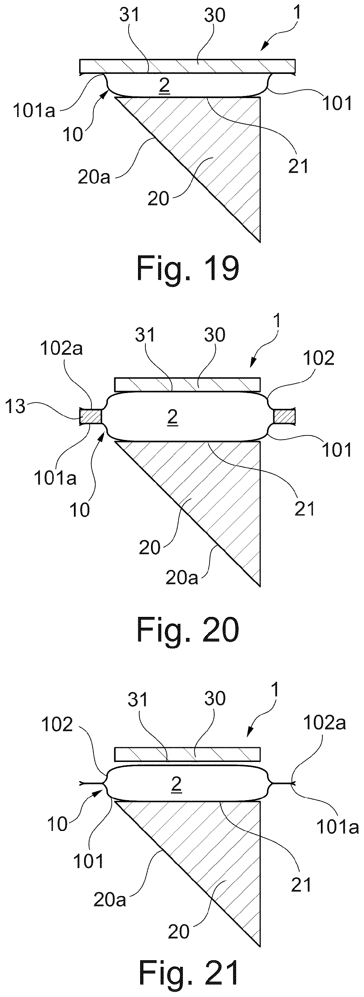

Figures 19 to 21 show individual embodiments of the container 10 for the prism 1 shown in Figs. 17 and 18.

According to a first variant depicted in Fig. 19, the container 10 comprises at least a first transparent and elastically deformable membrane 101 connected to the surface area 21 of the rigid first optical element 20, wherein the first membrane 101 is further connected to the second rigid optical element 30 via an edge region 101a of the first membrane 100 so that the optical medium 2 is enclosed by the first membrane 101 and the surface area 31 of the rigid second optical element 30. Here, the optical medium 2 contacts the surface area 31 of the rigid second optical element 30.

According to the embodiment shown in Fig. 20, the container 10 comprises a second transparent and elastically deformable membrane 102, that is connected to the surface area 31 of the rigid second optical element 30, while the first membrane 101 is connected to the surface area 21 of the rigid first optical element 20. Here the edge regions 101a, 102a of the two membranes 101, 102 are connected to a circumferential lateral wall 13 that can be formed as a ring member 13. The optical medium 2 is now enclosed by the two membranes 101, 102 and the lateral wall 13.

Alternatively, as shown in Fig. 21, the edge regions 101a, 102a of the two membranes 101, 102 can be attached to one another (e.g. by means of an adhesive), so that the optical medium 2 is now enclosed solely by the two membranes 101, 102.

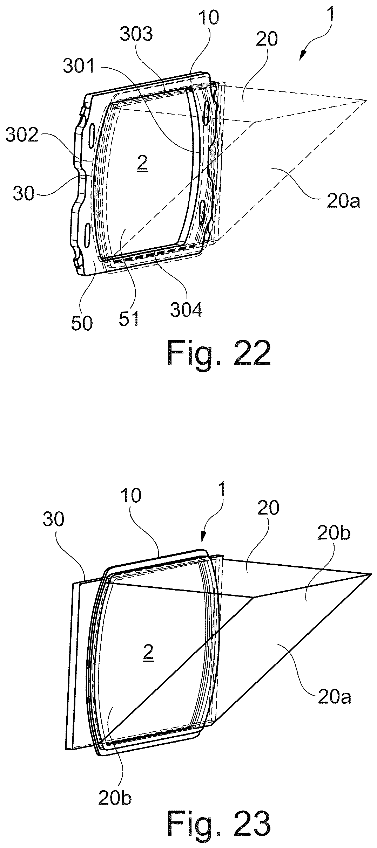

As shown in Fig. 22, the rigid second optical element 30 can be connected to a holding structure 50 that comprises an opening 51 for the passage of light. The holding structure serves for holding the second optical element 30 that is connected to the flexible container 10 and also serves as a mounting structure for one or more actuators that can be connected to the second optical element 30 via the holding structure 50 so as to tilt the second optical element 30.

According to Fig. 22, the rigid second optical element 30 is a so called D-cut optical element, i.e., it comprises two opposing straight edges 303, 304 as well as two opposing convexly curved edges 301, 302. Correspondingly, the opening 51 of the holding structure comprises a corresponding contour, i.e., two opposing straight edges and two opposing concavely curved edges.

Alternatively, as shown in Fig. 23, the rigid second optical element 30 can protrude past one or two lateral walls 20b of the rigid prism 20 to provide a portion or surface for holding the second optical element 30 and/or for connecting one or more actuators to the second optical element 30.

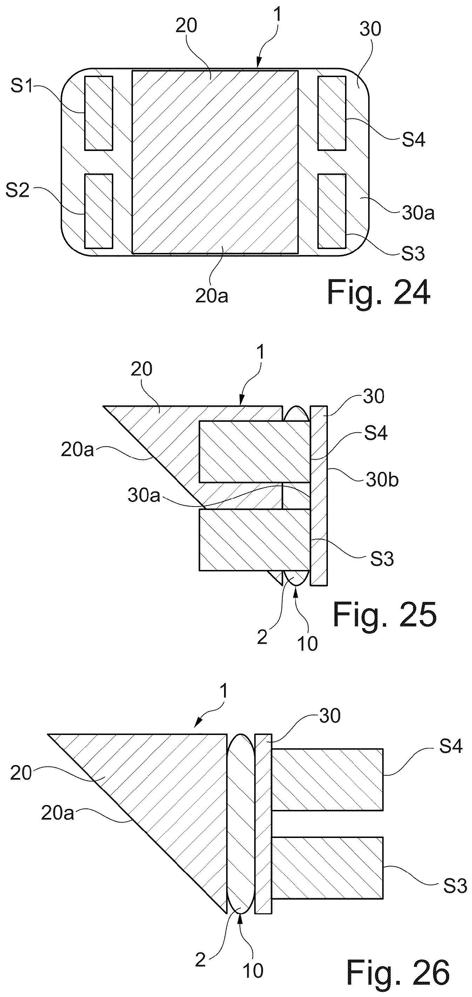

Figures 24 to 26 show different embodiments regarding the arrangement of actuators S1, S2, S3, S4 for tilting the rigid second optical element 30. Here, the tunable prism 1 can be designed according to one of the embodiments described above in conjunction with Figs. 17 to 23.

As shown in Figs. 24 and 25, the tunable prism 1 can comprise at least one actuator, here for example four actuators S1, S2, S3, S4, to tilt the rigid second optical element 30 with respect to the rigid first optical element / rigid prism 10. The actuation can be done next to the rigid prism 10 or in the opposite direction (cf. Fig. 26) using actuators S1, S2, S3, S4 such as moving coil type voice coil motors (VCM), moving magnet type VCM, shape-memory alloy actuators etc. The respective actuator S1, S2, S3, S4, can comprise a guiding spring to give the system a defined pivot point, wherein the respective spring can also serve as current lead if required.

Particularly, according to Figs. 24 and 25, for tilting the rigid second optical element 30, the respective actuator S1, S2, S3, S4 is connected to an exterior side 30a of the rigid second optical element 30, which exterior side 30a faces the rigid first optical element / rigid prism 20, so that particularly the respective actuator S1, S2, S3, S4 is arranged laterally of the rigid first optical element / rigid prism 20.

Alternatively, as shown in Fig. 26 the respective actuator S1, S2, S3, S4 is connected to an exterior side 30b of the rigid second optical element 30, which exterior side 30b faces away from the rigid first optical element 20, so that the second optical element 30 is arranged between the actuators S1, S2, S3, S4 and the rigid first optical element / rigid prism 20.

In Figs. 24 to 26 the respective actuator is directly connected to the rigid second optical element 30 for tilting the latter so as to adjust the angle W of the tunable prism 1.

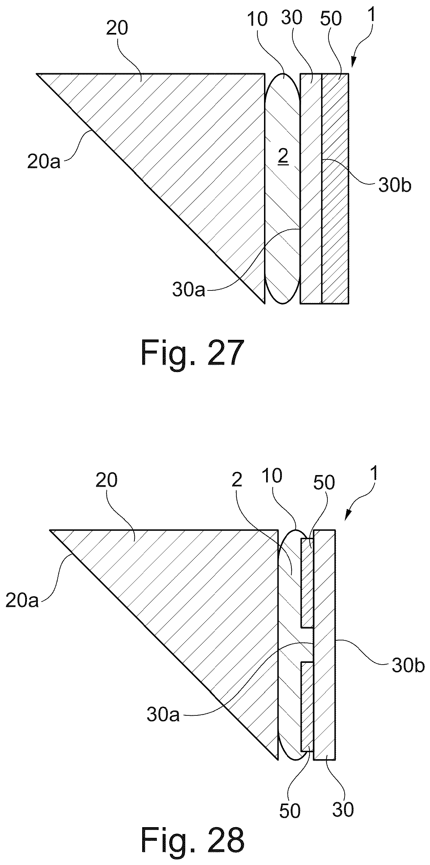

However, as indicated in Figs. 27 and 28, the respective actuator S1, S2, S3, S4 can be connected to the rigid second optical element 30 via a holding structure 50. Such a holding structure 50 can be connected to the exterior side 30b that faces away from the rigid prism 20 (cf. Fig. 27) or the other exterior side 30a that faces the rigid prism 20 (cf. Fig. 28). The holding structure 50 of Fig. 27 is particularly suitable for the actuator arrangement of Fig. 26. The holding structure 50 of Fig. 28 is particularly suitable for the actuator arrangement of Figs. 24 and 25. Furthermore, the holding structure can be comprised of several separated parts (cf. for example Fig. 26).

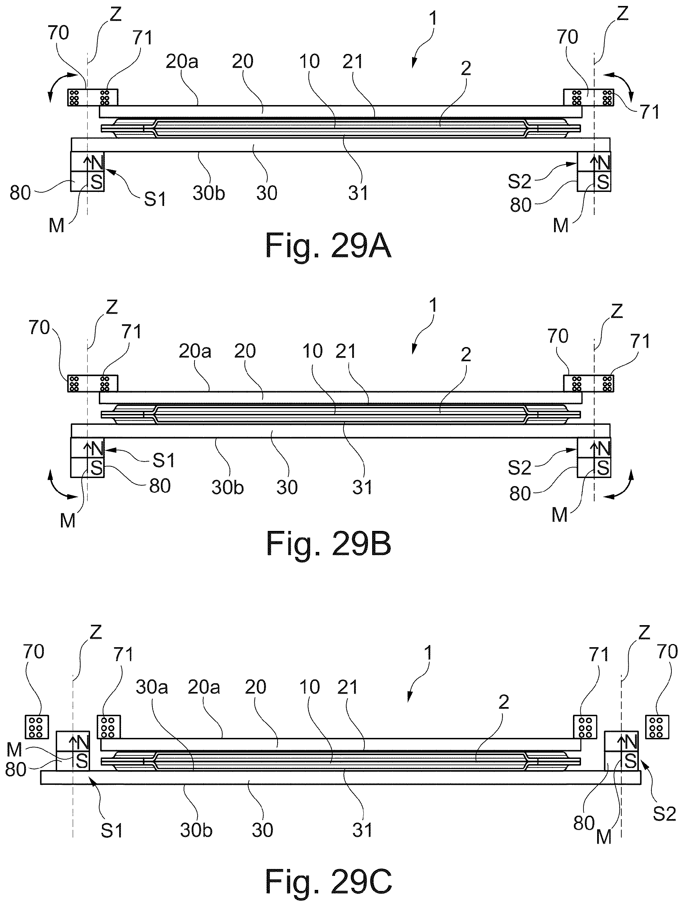

Figs. 29A to 29C show further embodiments of a tunable prism 1 according to the present invention, wherein here the respective actuator S1, S2 comprises a magnet 80 and an opposing electrical coil 70 to generate a Lorentz force when an electrical current is applied to the respective electrical coil 70 for tuning said angle of the tunable prism by tilting the rigid first (cf. Fig. 29A) or rigid second optical element 30 (cf. Fig. 29B) about at least one axis, respectively (here an axis that extends perpendicular to the shown cross-sectional plane).

As shown in Figs. 29A to 29C, when the surface areas 21, 31 of the rigid first and rigid second optical element 20, 30 are parallel, a winding axis z around which windings 71 of conductor of the respective electrical coil 70 extend is preferably aligned with a magnetization M of the magnet 80.

According to the embodiments shown in Figs. 29A and 29B, the respective magnet 80 is spaced apart from the associated electrical coil 70 in the direction of the magnetization M and/or of the winding axis z of the associated electrical coil 70. In an alternative embodiment shown in Fig. 29C, the magnet 80 protrudes into a central opening of the electrical coil 70, wherein the windings 71 of the electrical coil extend around this central opening.

In the embodiments shown in Fig. 29A to 29C, the magnets 80 are connected to the rigid second optical element 30 and the electrical coils 70 are connected to the rigid first optical element 20. However, the positions of the magnets 80 and coils 70 can also be interchanged, so that the coils 70 are connected to the rigid second optical element 30 and the magnets 80 to the rigid first optical element 20.

In the embodiment shown in Fig. 29A, the rigid second optical element 30 and the magnets 80 connected thereto are fixed, whereas the rigid first optical element 20 and the coils 70 connected thereto are configured to be tilted using the actuators S1. S2.

In the alternative embodiment shown in Fig. 29B, the rigid first optical element 20 and the electrical coils 70 connected thereto are fixed, whereas the rigid second optical element 30 and the magnets 80 connected thereto are configured to be tilted (this is particularly suited in case the rigid first optical element 20 is a rigid prism 20)

Preferably, the respective electrical coil 70 is integrated into a printed circuit board.

The moving part of the tunable prism 1 can either be freely moving or connected with flexture springs to define a pivot point.

Furthermore, the magnets 80 and coils 70 can also be connected to the respective structure (first or second optical element 20, 30) by means of intermediary holding structures 40, 50 as described herein.

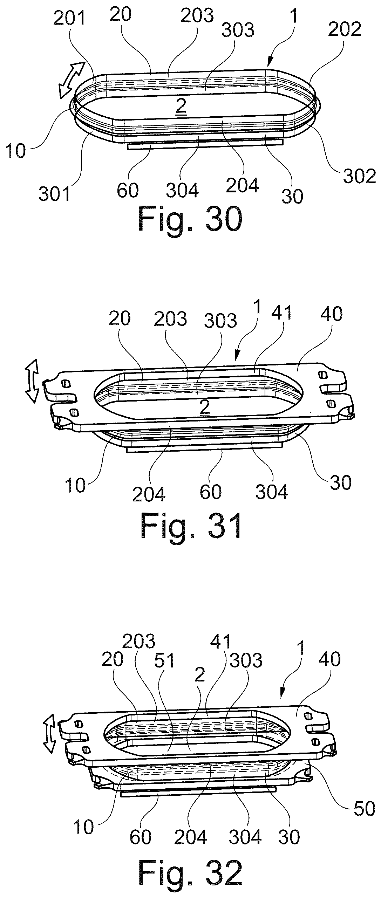

Further, Fig. 30 shows a perspective view of an embodiment of a tunable prism 1 according to the invention, wherein the tunable prism 1 comprises a rigid first and a rigid second optical element 20, 30 in the form of two flat D-cut rigid optical elements 20, 30 on either side of the container 10 containing the optical medium 2, wherein particularly the rigid second optical element 30 is configured to be connected to a mounting structure 60 of further device that uses the tunable prism 1 (for example a mobile phone where the tunable prism 1 is part of a camera).

Particularly, D-cut means, that each rigid optical element 20, 30 comprises a convexly curved first edge 201, 301 and a convexly curved second edge 202, 302 opposite the first edge 201, 301, and a straight third edge 203, 303 and a straight fourth edge 204, 304 opposite the third edge 203, 304, the third and fourth edges 203, 204, 303, 304 extending between the first and second edges 201, 202, 301, 302, respectively.

As shown in Fig. 31, a first holding structure 40 comprising an opening 41 that corresponds to the D-cut shape of the rigid first optical element 20 can be connected to the rigid first optical element 20, for example to tilt the latter with respect to the rigid second optical element 30 so that the container 10 in between the two optical elements 20, 30 is formed into a prism (e.g. a wedge shape) so as to adjust a deflection of light entering the tunable prism 1. Also here, the rigid second optical element 30 is configured to be connected to a mounting structure 60 of further device that uses the tunable prism 1 (for example a mobile phone where the tunable prism 1 is part of a camera).

Furthermore, as indicated in Fig. 32, a second holding structure 50 comprising an opening 51 that has a contour corresponding to the shape of the D-cut second optical element 30 is connected to the second optical element 30, so that the two optical elements 20, 30 and the container 10 therebetween are arranged between the two holding structures 40, 50, Here, the second holding structure 50 can configured to be connected to a mounting structure 60 of further device that uses the tunable prism 1 (for example a mobile phone where the tunable prism 1 is part of a camera).

Generally, in all embodiments the form of the rigid optical elements 20, 30 (for example glass elements) and also the form of the container 10 can be adapted to the desired geometry and is not limited to a D-cut, but may also be rectangular, elliptical, circular etc. Furthermore, the respective holding structure 40, 50 can comprise a serial number such as a QR-code, DMC-code, barcode, plain text, etc. to ensure the traceability of the tunable prism 1 during production.

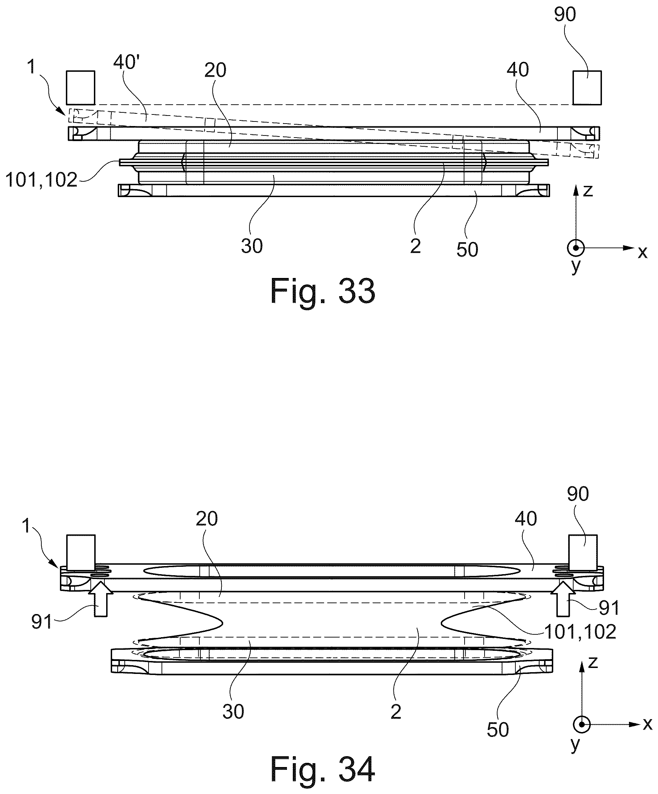

Fig. 33 shows a tunable prism 1 comprising an endstop 90. The endstop 90 is arranged to limit the relative movement of the first optical element 20 and the second optical element 30 along the z-axis. The endstop 90 may be fabricated by means of injection molding. In particular, the endstop 90 may be arranged to limit motion of the optical element. For example, the endstop 90 limits pull travel along the z-axis, shear travel along the x-axis and/or y-axis and push travel, which results in a tilt of the first optical element.

The second optical element 30 is mounted on the second holding structure 50. The first optical element 20, is attached to the first holding structure 40. The first 40 and the second 50 holding structure have a frame-like shape, which extends along a plane defined by the x-axis and the y-axis. At least one of the holding structures 40, 50 is arranged to be mechanically connected to an actuator, which is arranged to move the holding structures 40, 50 with respect to each other. In particular, the actuator is arranged to bring the first holding structure into a tilted state 40'. For example, the first holding structure in the tilted state 40' is not in indirect contact with the endstop 90 when actuated by means of the actuator.

Fig. 34 shows the same embodiment of the tunable prism of Fig. 33, wherein the holding structures 40, 50 are moved with respect tot each other by means of an acceleration force 91. The acceleration force 91 is not caused by the actuator. The acceleration force 91 may be caused by inertia of the movably mounted first holding structure 40 and first optical element 20. The acceleration force 91 pulls the first holding structure 40 and the first optical element 20 along the z-axis. When the tunable prism 1 is exposed to the acceleration force 91 the membranes 101, 102 become fully extended on all sides simultaneously. The endstop 90 prevents damage of the membranes 101, 102 due to the extension. The relative movement of the first optical element 20 and the second optical element 30 is limited by the endstop 90. The volume of the optical medium 2 remains constant. Thus, when the distance between the optical elements 20 ,30 is increased along the z-axis, the periphery of the membranes 101, 102 is pulled in between the optical elements 20, 30. In particular, the dimensions of the periphery of the membranes are selected such that the membranes do not protrude beyond the optical elements in the plane defined by the x-axis and the y-axis in a state where the relative position of the optical elements is defined by the endstop 90. In a state without acceleration force 91, the periphery of the membranes 101, 102 protrudes beyond the edges of the optical elements 20, 30 along the plane defined by the x-axis and the y-axis. In particular, the periphery of the membranes 101, 102 protrudes the optical elements by at least 200 micrometres in a state without acceleration force 91.

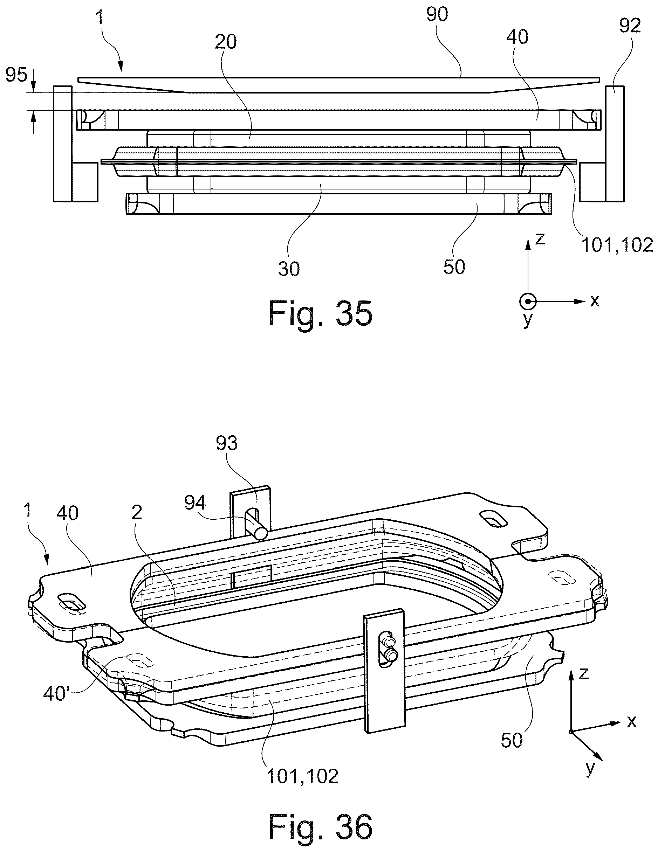

Fig. 35 shows a side view of an embodiment of a tunable prism comprising an endstop 90 which limits the relative motion of the optical elements 20, 30 along the z-axis. Additionally, the tunable prism 1 comprises a lateral endstop 92, which limits the relative movement of the optical elements 20, 30 along the plane defined by the x-axis and the y-axis. The endstop 90 and the lateral endstop 92 limit the position of the first optical element 20 by providing a hard stop the first holding structure 40.

For example, the tunable prism 1, in particular the first holding structure 40, has a rectangular shape as seen in a top view onto the plane defined by the x-axis and the y-axis. The first holding structure 40 has a first edge which basically extends along the x-axis, and a second edge which basically extends along the y-axis. The length of the first edge is larger than the length of the second edge. In particular, the surface of the endstop 90 which faces the holding structure 40 is bent. Thus, the maximum pull range 95, wherein the first holding structure 50 is pulled against the endstop 90 due to acceleration force 91, does not limit the maximum tilt of the first holding structure 40. For example, the maximum pull range 95 is defined by the minimal distance between the first holding structure 40 in a non-deflected state and the endstop 90. In particular the maximum pull range 95 is 200 micrometers, preferably 100 micrometers. Advantageously, a small pull range 95 reduces the required peripheral material of the first and second membrane 101, 102, which protrudes beyond the first and second optical element 20, 30. Thereby, the size of the tunable prism 101, 102 may be minimized. Thus, along the z-axis the distance between the second edge and the endstop 90 is larger than the distance between the first edge and the endstop 90.

Fig. 36 shows a schematic perspective view of an embodiment of a tunable prism 1 comprising a pivot structure, which is arranged to define the pivot point of the first optical element 20 with respect to the second optical element 30. The pivot structure comprises a protrusion 94, which is fixedly connected to the first holding structure 40. The protrusion 94 engages in a rail element 93, which guides the movement of the protrusion 94 along the rail element 93. The rail element 93 may be bent, such that the rail element 93 guides the movement of the first holding structure 40 during tilt motions and provides an endstop in a direction along the z-axis. Advantageously, the pivot structure improves the tilt performance and makes the prism more robust against vibrations.

Fig. 37 partially shows a schematic side view of an embodiment of a tunable prism 1, having a non-prestrained first and second membrane 101,102. In this embodiment, the periphery of the membranes 101, 102, which is not in direct contact with the first or second optical element 20, 30, extends along the plane defined by the x-axis and y-axis in a non-deflected state. Here and in the following, in the non-deflected state the first optical element 20 rests with its weight on the second optical element or vice versa.

Fig. 37 and 38 partially show a schematic side view of a tunable prism, having a prestrained first and second membrane 101, 102. The periphery of the first and second membrane extends obliquely with respect to a plane defined by the x-axis and the y-axis in the non-deflected state. For example, the periphery of the first and second membrane 101, 102 comprises wrinkles. Due to the wrinkles, the membranes 101, 102 are at least partially bent towards the first or second optical element 20, 30.

Fig. 40 shows an embodiment of a tunable prism 1 in schematic perspective view comprising interposed endstops 96 which limit the minimal distance between the optical elements 20, 30. The total height of the interposed endstops 96 along the z-axis is larger than the thickness of the optical elements 20, 30 along the z-axis. The interposed endstops 96 are integrated into the first holding structure 40 and the second holding structure 50. The interposed endstops 96 are formed by protrusions of the first and second holding structure 40, 50. The interposed endstops 96 of the first and second holding structure 40, 50 are opposed to each other. The interposed endstops 96 respectively extend towards eachother along the z-axis.

Advantageously, reduce the risk of damage of the optical elements 20, 30.

Fig. 41 and 42 show an embodiment of a tunable prism 1 in schematic perspective view and side view comprising interposed endstops 96 which limit minimal distance between the optical elements 20, 30. The interposed endstops 96 are formed by spherical elements. The spherical elements may comprise metal, rubber, pdms or polysterol. In particular, the interposed endstops 96 are formed with cured glue. The first and second holding structure 40, 50 comprise recesses, in which the interposed endstops 96 are arranged. Each interposed endstop 96 arranged on the first holding structure 40 is opposed to an interposed endstop 96 arranged on the second holding structure 50. When the relative movement of the optical elements 20, 30 is limited by the interposed endstops 96, at least one interposed endstop 96 of the first holding structure 40 is in direct contact with an opposed interposed endstop 96 of the second holding structure 50.

Fig. 43 shows an embodiment of a tunable prism 1 in schematic side view comprising interposed endstops 96 which limit the minimal distance between the optical elements 20, 30 along the z-axis. The interposed endstops 96 are formed by spherical elements. The interposed endstops are arranged on a surface of the first holding structure 40 or the second holding structure 50. When the distance between the optical elements 20, 30 is limited by means of the interposed endstops 96, at least one spherical element is in direct contact with both holding structures 40, 50.

In the following further aspects and embodiments thereof are states as items but may also be formulated as claims. The reference numerals in parentheses relate to the Figures described above.

Item 1: A tunable prism (1) for deflecting light (L) incident on the tunable prism (1) in a variable fashion, wherein the tunable prism (1) comprises: a member (10) comprising a transparent and flexible first surface (11), a transparent and flexible second surface (12) that faces away from the first surface (11), and an optical medium (2) arranged between the two surfaces (11, 12), such that light (L) incident on the first surface (11) passes through the optical medium (2) and exits the member (10) via the second surface (12), whereby the light (L) is deflected by the member (10) depending on an angle (W) between the two surfaces (11, 12); a rigid first optical element (20) comprising a surface area (21) connected to the first surface (11); a rigid second optical element (30) comprising a surface area (31) connected to the second surface (12); and an actuator system (S) configured to tilt the first optical element (20) and/or the second optical element (30) to tune said angle (W).

Item 2: The tunable prism according to item 1, wherein the member (10) delimits a volume of the optical medium (2) completely on all sides.

Item 3: The tunable prism according to item 1 or 2, wherein the surface area (21) of the first optical element (20) is connected to a portion (11a) of the first surface (11) such that the first surface (11) comprises a free circumferential portion (11b) not covered by the surface area (21) of the first optical element (20), and/or wherein the surface area (31) of the second optical element (30) is connected to a portion (12a) of the second surface (12) such that the second surface (12) comprises a free circumferential portion (12b) not covered by the surface area (31) of the second optical element (30).

Item 4: The tunable prism according to one of the preceding items, wherein the member (10) is a container filled with the optical medium (2), wherein the container comprises a first transparent and elastically deformable membrane (101) and a second transparent and elastically deformable membrane (102), wherein the two membranes (101, 102) are connected via a circumferential lateral wall (13) of the container, and wherein the first membrane (101) forms said first surface (11), and wherein the second membrane (102) forms said second surface (12), wherein the optical medium (2) is arranged between the first and the second membrane (101, 102).

Item 5: The tunable prism according to item 4, wherein the first membrane (101) extends continuously under the first optical element (20) and the second membrane (102) extends continuously under the second optical element (30).

Item 6: The tunable prism according to item 5, wherein the lateral wall (13) is rigid or flexible.

Item 7: The tunable prism according to item 6, wherein the lateral wall (13) is flexible and consists of the free circumferential portions (11b, 12b).

Item 8: The tunable prism according to items 4 to 7, wherein a diameter (D1) of the surface area (21) of the first optical element (20) is smaller than a diameter (D) of a volume surrounded by the circumferential lateral wall (13); and/or wherein a diameter (D2) of the surface area (31) of the second optical element (30) is smaller than a diameter (D) of a volume surrounded by the circumferential lateral wall (13).

Item 9: The tunable prism according to item 1 or 2, wherein the member is a container comprising a transparent and elastically deformable membrane enclosing the optical medium, wherein the membrane forms said first surface and said second surface.

Item 10: The tunable prism according to item 1 or 2, wherein the container comprises a first transparent and elastically deformable membrane and a second transparent and elastically deformable membrane, wherein the two membranes are connected to one another to enclose the optical medium, wherein the first membrane forms said first surface and wherein the second membrane forms said second surface.

Item 11: The tunable prism according to one of the preceding items, wherein the optical medium (2) is a transparent liquid or a transparent gel.

Item 12: The tunable prism according to one of the items 1 to 2, wherein the member (10) is one of: a transparent and flexible body, a transparent and flexible body formed out of a rubber, a transparent and flexible body formed out of a cured gel.

Item 13: The tunable prism according to one of the preceding items, wherein the tunable prism (1) comprises a first holding structure (40) configured to hold the first optical element (20); and/or wherein the tunable prism (1) comprises a second holding structure (50) configured to hold the second optical element (30), wherein the first holding structure (40) is formed by a plate comprising an opening (41), wherein the first optical element (20) is arranged in front of the opening (41); and/or wherein the second holding structure (50) is formed by a plate comprising an opening (51), wherein the second optical element (30) is arrange in front of the opening (51) of the second holding structure (50).

Item 14: The tunable prism according to item 13, wherein the first optical element (20) is connected to the first holding structure (40) via a first intermediate optical element (25), wherein the first intermediate optical element (25) comprises a diameter (D3) that is larger than a diameter (D1) of the first optical element (20); and/or wherein the second optical element (30) is connected to the second holding structure (50) via a second intermediate optical element (35), wherein the second intermediate optical element (35) comprises a diameter (D4) that is larger than a diameter (D2) of the second optical element (30).

Item 15: The tunable prism according to item 13, wherein the first holding structure (40) is integrally formed with the first optical element (20); and/or wherein the second holding structure (50) is integrally formed with the second optical element (30).

Item 16: The tunable prism according to item 13 or 15, wherein the first optical element (20) comprises a protrusion (27), wherein the surface area (21) of the first optical element (20) is delimited by a circumferential edge (28) of the protrusion (27); and/or wherein the second optical element (30) comprises a protrusion (37), wherein the surface area (31) of the second optical element (30) is delimited by a circumferential edge (38) of the protrusion (37) of the second optical element (30).

Item 17: The tunable prism according to one of the items 13 to 16, wherein one of the two holding structures (40, 50) is rigidly connected to a support structure (3) of the tunable prism (1), wherein the actuator system (S) is configured to act on the other holding structure (50, 40) so as to adjust said angle (W).

Item 18: The tunable prism according to one of the items 13 to 16, wherein the member (10) is rigidly connected to a support structure (3) of the tunable prism (1), wherein the actuator system (S) is configured to act on the first holding structure (40) to tilt the first optical element (20) and to act on the second holding structure (50) to tilt the second optical element (30) so as to adjust said angle (W).

Item 19: The tunable prism according to item 17 or 18, wherein the member (10) is connected to the support structure (3) of the tunable prism (1) via one or several springs (4) or via a gimbal (5).

Item 20: The tunable prism according to one of the preceding items, wherein the actuator system (S) comprises a plurality of actuators (S1, S2,...) to tilt the first holding structure (40) about a first axis (A1) and/or about a second axis (A2), wherein particularly the two axes (A1, A2) are perpendicular; and/or wherein the actuator system (S) comprises a plurality of actuators (S1, S2,...) to tilt the second holding structure (50) about a first axis and/or about a second axis, wherein particularly the two axes are perpendicular.

Item 21: The tunable prism according to one of the preceding items, wherein the tunable prism (1) comprises a height (H) in a first direction and a length (X) in a second direction extending perpendicular to the first direction, wherein the two directions extend perpendicular to an optical axis (O) of the tunable prism (1), and wherein the height (H) is smaller than the length (X).

Item 22: The tunable prism according to items 20 and 21, wherein the actuators (S1, S2, ...) are grouped in two actuator groups (G1, G2), wherein said actuator groups (G1, G2) are arranged on opposite sides of the member (10) with respect to the second direction.

Item 23: The tunable prism according to one of the items 20 to 22, wherein a sensor (H1, H2, ...), particularly a Hall sensor, is arranged adjacent each actuator (S1, S2, ...) to measure a stroke of the respective actuator, wherein particularly the tunable prism (1) is configured to use the respective measured stroke to control tuning of said angle (W) or to reduce crosstalk between individual actuators (S1, S2,...).

Item 24: The tunable prism according to one of the preceding items, wherein the tunable prism (1) comprises a temperature sensor adjacent the optical medium (2) to measure the temperature of the optical medium (2).

Item 25: The tunable prism according to item 24, wherein for generating a desired optical deflection angle (U) of the light (L) passing the tunable prism (1), the tunable prism (1) is configured to determine an actual refractive index of the optical medium (2) based on the measured temperature and to determine a reference value of said angle (W) so that the desired optical deflection angle (U) is achieved when said angle (W) of the tunable prism (1) is tuned to the determined reference value.

Item 26: A tunable prism (1) for deflecting light (L) incident on the tunable prism (1) in a variable fashion, wherein the tunable prism (1) comprises:
- a rigid first optical element (20) comprising a surface area (21),
- a rigid second optical element (30) comprising a surface area (31),
- an optical medium (2) arranged between the two surfaces areas (21, 31), such that light (L) incident on the first rigid optical element passes the surface area (21) of the rigid first optical element (20), the optical medium (2) and the surface area (31) of the rigid second optical element (30), whereby the light (L) is deflected depending on an angle (W) between the two surface areas (21, 31).

Item 27: The tunable prism according to one of the preceding items, wherein the first rigid optical element (20) is a rigid prism.

Item 28: The tunable prism according to item 26, wherein the rigid first optical element (20) comprises an exterior surface (20a) that extends at an acute angle (A) with respect to the surface area (21) of the rigid first optical element (20), wherein the exterior surface (20a) is configured to receive light (L) that is to be deflected by the tunable prism (1).

Item 29: The tunable prism according to one of the items 1 to 26, wherein the rigid first optical element (20) comprises a convexly curved first edge (201) and a convexly curved second edge (202) opposite the first edge (201), and wherein the rigid first optical element (20) comprises a straight third edge (203) and a straight fourth edge (204) opposite the third edge (203), the third and fourth edges (203, 204) extending between the first and second edges (201, 202), respectively.

Item 30: The tunable prism according to one of the items 1 to 29, wherein the rigid second optical element (30) comprises a convexly curved first edge (301) and a convexly curved second edge (302) opposite the first edge (301), and wherein the rigid second optical element (30) comprises a straight third edge (303) and a straight fourth edge (304) opposite the third edge (303), the third and fourth edges (303, 304) extending between the first and second edges (301, 302), respectively.

Item 31: The tunable prism according to one of the items 26 to 30, wherein the second rigid optical element (30) is configured to be tilted to tune said angle (W), and/or wherein the rigid first rigid optical element (20) is configured to be tilted to tune said angle (W).

Item 32: The tunable prism according to one of the items 26 to 31, wherein the tunable prism (1) comprises at least one actuator (S1, S2, S3, S3) to tilt the rigid second optical element (30) with respect to the rigid first optical element (10).

Item 33: The tunable prism according to item 32, wherein for tilting the rigid second optical element (30), the at least one actuator (S1, S2, S3, S4) is connected to an exterior side (30a) of the rigid second optical element (30) which faces the rigid first optical element (20).

Item 34: The tunable prism according to item 32, wherein for tilting the rigid second optical element (30), the at least one actuator (S1, S2, S3, S4) is connected to an exterior side (30b) of the rigid second optical element (30) which faces away from the rigid first optical element (20).

Item 35: The tunable prism according to one of the items 32 to 34, wherein the at least one actuator (S1, S2, S3, S4) is connected via a holding structure (50) to the exterior side (30a, 30b), wherein the holding structure (50) is configured to hold the rigid second optical element (30), and wherein the holding structure (50) is attached to the exterior side (30a, 30b).

Item 36: The tunable prism according to one of the items 20 to 23 or according to one of the items 30 to 33, wherein the respective actuator (S1, S2, S3, S3) comprises a magnet (80) and an opposing electrical coil (70) to generate a Lorentz force when an electrical current is applied to the electrical coil.

Item 37: The tunable prism according to item 35, wherein the holding structure (50) is formed by a plate comprising an opening (51), wherein the rigid second optical element (30) is arranged in front of the opening (51).

Item 38: The tunable prism according to one of the items 26 to 37, wherein the optical medium (2) is arranged in a container (10).

Item 39: The tunable prism according to item 38, wherein the container (10) comprises a first transparent and elastically deformable membrane (101) connected to the surface area (21) of the rigid first optical element (20), wherein particularly the first membrane (101) forms a wall of the container (10).

Item 40: The tunable prism according to item 38 or 39, wherein the rigid second optical element (30) forms a wall of the container (10), wherein the optical medium (2) contacts the surface area (31) of the rigid second optical element (30).

Item 41: The tunable prism according to item 39 or 40, wherein the first membrane (101) is connected to the second rigid optical element (30) via an edge region (101a) of the first membrane (101).

Item 42: The tunable prism according to item 38 or 39, wherein the container (10) comprises a second transparent and elastically deformable membrane (102) connected to the surface area (31) of the rigid second optical element (30).

Item 43: The tunable prism according to item 42, wherein the first and the second membrane (101, 102) are connected to one another.

Item 44: The tunable prism according to item 42, wherein the first and the second membrane (101, 102) are connected to one another via a circumferential lateral wall (13) of the container (10), wherein the optical medium (2) is arranged between the first and the second membrane (101, 102).

## Claims

1. A tunable prism (1) for deflecting light (L) incident on the tunable prism (1) in a variable fashion, wherein the tunable prism (1) comprises:
- a member (10) comprising a transparent and flexible first surface (11), a transparent and flexible second surface (12) that faces away from the first surface (11), and an optical medium (2) arranged between the two surfaces (11, 12), such that light (L) incident on the first surface (11) passes through the optical medium (2) and exits the member (10) via the second surface (12), whereby the light (L) is deflected by the member (10) depending on an angle (W) between the two surfaces (11, 12), wherein the member (10) is a container filled with the optical medium (2);
- a rigid first optical element (20) comprising a surface area (21) connected to the first surface (11),
- a rigid second optical element (30) comprising a surface area (31) connected to the second surface (12),
- an actuator system (S) configured to tilt the first optical element (20) and/or the second optical element (30) to tune said angle (W)
wherein a diameter (D1) of the surface area (21) of the first optical element (20) is smaller than a diameter (D) of a volume surrounded by the circumferential lateral wall (13) of the container (2).

2. The tunable prism according to claim 1, wherein the surface area of the first optical element (20) comprises a circular shape.

3. The tunable prism according to claim 1 or claim 2, wherein the member (10) delimits a volume of the optical medium (2) completely on all sides.

4. The tunable prism according to any preceding claim, wherein the surface area (21) of the first optical element (20) is connected to a portion (11a) of the first surface (11) such that the first surface (11) comprises a free circumferential portion (11b) not covered by the surface area (21) of the first optical element (20), and/or wherein the surface area (31) of the second optical element (30) is connected to a portion (12a) of the second surface (12) such that the second surface (12) comprises a free circumferential portion (12b) not covered by the surface area (31) of the second optical element (30).

5. The tunable prism according to one of the preceding claims, wherein the member (10) is a container filled with the optical medium (2), wherein the container comprises a first transparent and elastically deformable membrane (101) and a second transparent and elastically deformable membrane (102), wherein the two membranes (101, 102) are connected via a circumferential lateral wall (13) of the container, and wherein the first membrane (101) forms said first surface (11), and wherein the second membrane (102) forms said second surface (12), wherein the optical medium (2) is arranged between the first and the second membrane (101, 102).

6. The tunable prism according to claim 4, wherein the first membrane (101) extends continuously under the first optical element (20) and the second membrane (102) extends continuously under the second optical element (30).

7. The tunable prism according to claim 6, wherein the lateral wall (13) is rigid or flexible.

8. The tunable prism according to claim 7, wherein the lateral wall (13) is flexible and consists of the free circumferential portions (11b, 12b).

9. The tunable prism according to claim 1, 2 or 3, wherein the member is a container comprising a transparent and elastically deformable membrane enclosing the optical medium, wherein the membrane forms said first surface and said second surface.

10. The tunable prism according to claim 1, 2 or 3, wherein the container comprises a first transparent and elastically deformable membrane and a second transparent and elastically deformable membrane, wherein the two membranes are connected to one another to enclose the optical medium, wherein the first membrane forms said first surface and wherein the second membrane forms said second surface.

11. The tunable prism according to one of the preceding claims, wherein the optical medium (2) is a transparent liquid or a transparent gel.

12. The tunable prism according to one of the claims 1, 2 to 2, wherein the member (10) is one of: a transparent and flexible body, a transparent and flexible body formed out of a rubber, a transparent and flexible body formed out of a cured gel.

13. The tunable prism according to one of the preceding claims, wherein the tunable prism (1) comprises a first holding structure (40) configured to hold the first optical element (20); and/or wherein the tunable prism (1) comprises a second holding structure (50) configured to hold the second optical element (30), wherein the first holding structure (40) is formed by a plate comprising an opening (41), wherein the first optical element (20) is arranged in front of the opening (41); and/or wherein the second holding structure (50) is formed by a plate comprising an opening (51), wherein the second optical element (30) is arrange in front of the opening (51) of the second holding structure (50).

14. The tunable prism according to claim 13, wherein the first optical element (20) is connected to the first holding structure (40) via a first intermediate optical element (25), wherein the first intermediate optical element (25) comprises a diameter (D3) that is larger than a diameter (D1) of the first optical element (20); and/or wherein the second optical element (30) is connected to the second holding structure (50) via a second intermediate optical element (35), wherein the second intermediate optical element (35) comprises a diameter (D4) that is larger than a diameter (D2) of the second optical element (30).

15. The tunable prism according to claim 13, wherein the first holding structure (40) is integrally formed with the first optical element (20); and/or wherein the second holding structure (50) is integrally formed with the second optical element (30).
